(19) **Europäisches Patentamt**
**European Patent Office**
**Office européen des brevets**

(11) **EP 2 715 915 B1**

(12) **EUROPEAN PATENT SPECIFICATION**

(45) Date of publication and mention
of the grant of the patent:
**04.11.2020 Bulletin 2020/45**

(51) Int Cl.:
*H02J 7/00* (2006.01)    *H04B 5/02* (2006.01)
*H04B 5/00* (2006.01)    *H02J 5/00* (2016.01)
*H01F 38/14* (2006.01)

(21) Application number: **11867039.7**

(22) Date of filing: **31.05.2011**

(86) International application number:
**PCT/US2011/038640**

(87) International publication number:
**WO 2012/166126 (06.12.2012 Gazette 2012/49)**

(54) **COMBINING POWER FROM MULTIPLE RESONANCE MAGNETIC RECEIVERS IN RESONANCE MAGNETIC POWER SYSTEM**

LEISTUNGSKOMBINATION AUS MEHREREN MAGNETRESONANZEMPFÄNGERN IN EINEM MAGNETRESONANZSTROMVERSORGUNGSSYSTEM

COMBINER LA PUISSANCE DE MULTIPLES RÉCEPTEURS MAGNÉTIQUES À RÉSONANCE DANS UN SYSTÈME DE PUISSANCE MAGNÉTIQUE À RÉSONANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.05.2011 US 201161491844 P**

(43) Date of publication of application:
**09.04.2014 Bulletin 2014/15**

(73) Proprietor: **Apple Inc.**
**Cupertino CA 95014 (US)**

(72) Inventors:
• **TAN, Li-Quan**
**Cupertino, California 95014 (US)**
• **AMM, David T.**
**Cupertino, California 95014 (US)**

(74) Representative: **Froud, Christopher Andrew et al**
**Withers & Rogers LLP**
**4 More London Riverside**
**London, SE1 2AU (GB)**

(56) References cited:
WO-A2-2011/062827    US-A- 5 701 121
US-A1- 2003 214 821    US-A1- 2008 298 100
US-A1- 2009 058 189    US-A1- 2009 134 712
US-A1- 2009 271 048    US-A1- 2010 244 576

**Description**

<u>TECHNICAL FIELD</u>

The described embodiments relate generally to utilizing a wireless power transmission in a portable computing environment.

<u>BACKGROUND</u>

Energy or power may be transferred wirelessly using a variety of known radiative, or far-field, and non-radiative, or near-field, techniques. For example, radiative wireless information transfer using low-directionality antennas, such as those used in radio and cellular communications systems and home computer networks, may be considered wireless energy transfer. However, this type of radiative transfer is very inefficient because only a tiny portion of the supplied or radiated power, namely, that portion in the direction of, and overlapping with, the receiver is picked up. The vast majority of the power is radiated away in all the other directions and lost in free space. Such inefficient power transfer may be acceptable for data transmission, but is not practical for transferring useful amounts of electrical energy for the purpose of doing work, such as for powering or charging electrical devices.

One way to improve the transfer efficiency of some radiative energy transfer schemes is to use directional antennas to confine and preferentially direct the radiated energy towards a receiver. However, these directed radiation schemes may require an uninterruptible line-of-sight and potentially complicated tracking and steering mechanisms in the case of mobile transmitters and/or receivers. In addition, such schemes may pose hazards to objects or people that cross or intersect the beam when modest to high amounts of power are being transmitted. A known non-radiative, or near-field, wireless energy transfer scheme, often referred to as either induction or traditional induction, does not (intentionally) radiate power, but uses an oscillating current passing through a primary coil, to generate an oscillating magnetic near-field that induces currents in a near-by receiving or secondary coil. Traditional induction schemes have demonstrated the transmission of modest to large amounts of power, however only over very short distances, and with very small offset tolerances between the primary power supply unit and the secondary receiver unit. Electric transformers and proximity chargers are examples of devices that utilize this known short range, near-field energy transfer scheme.

It is well known that useable power can be transferred wirelessly from a power source to a receiver located within a distance referred to as a near field. By near field it is meant that within a distance a few times larger than that of both objects involved in the transfer (about one meter or so for most applications) a relatively large amount of power (at least on the order of a few watts) can be transferred between a wireless source device and a receiver with an acceptable efficiency. In this way, a realistic and practical approach to wireless transferring useable amounts of power over distances suitable for limited applications can be realized. Typically, each battery powered device such as a wireless electronic device requires its own charger and power source, which is usually an alternating current (AC) power outlet. Such a wired configuration becomes unwieldy when many devices need charging.

US 2008/0298100 discloses a contactless power receiving unit capable of generating constant induced electromotive force regardless of the orientation of a power receiving coil.

What is desired are methods, systems, and apparatus for efficient and user friendly interaction between peripheral devices in a wirelessly powered local computing environment.

The following are from Annals of Physics 323 (2008) 34-48 "Efficient Wireless non-radiative mid-range energy transfer" by Aristeidis Karalis et al., available online April 27, 2007.

**1. Introduction**

In the early days of clectromagnetism, before the electrical-wire grid was deployed, serious interest and effort was devoted (most notably by Nikola Tesla [1]) towards the development of schemes to transport energy over long distances without any carrier medium (e.g. wirelessly). These efforts appear to have met with little success. Radiative modes of omnidirectional antennas (which work very well for information transfer) are not suitable for such energy transfer, because a vast majority of energy is wasted into free space. Directed radiation modes, using lasers or highly-directional antennas, can be efficiently used for energy transfer, even for long distances (transfer distance $L_{TRANS}$ » $L_{DEV}$, where $L_{DEV}$ is the characteristic size of the device), but require existence of an uninterruptible line-of-sight and a complicated tracking system in the case of mobile objects. Rapid development of autonomous electronics of recent years (e.g. laptops, cell-phones, house-hold robots, that all typically rely on chemical energy storage) justifies revisiting investigation of this issue. Today, we face a different challenge than Tesla: since the existing electrical-wire grid carries energy *almost* everywhere, even a medium-range ($L_{TRANS} \approx$ few*$L_{DEV}$) wireless energy transfer would be quite useful for many applications, There are several currently used themes, which rely on non-radiative modes (magnetic induction), but they are restricted to very close-range ($L_{TRANS}$ « $L_{DEV}$) or very low-power (~mW) energy transfers [2-6].

In contrast to all the above schemes, we investigate the feasibility of using long-lived oscillatory resonant electromagnetic modes, with localized slowly-evanescent field patterns, for efficient wireless *non-radiative mid-range* energy transfer. The proposed method is based on the well known principle of resonant coupling (the fact that two same-frequency resonant objects tend to couple, while interacting weakly with other off-resonant environmental objects and, in particular, resonant evanescent coupling (whete the coupling mechanism is mediated through the overlap of the non-radiative near-fields of the two objects). This well known physics leads trivially to the result that energy can be efficiently coupled between objects in the extremely near field (e.g. in optical waveguide or cavity couplers and in resonant inductive electric transformers). However, it is far from obvious how this same physics performs at mid-range distances and, to our knowledge, there is no work in the literature that demonstrates efficient energy transfer for distances a few times larger that the largest dimension of both objects involved in the transfer. In the present paper, our detailed theoretical and numerical analysis shows that such an efficient mid-range wireless energy-exchange can actually be achieved. while suffering only modest transfer and dissipation of energy into other off-resonant objects, provided the exchange system is carefully designed to operate in a regime of "strong coupling" compared to all intrinsic loss rates. The physics of "strong coupling" is also known but in very different areas, such as those of light-matter interactions [7] In this favorable operating regime, we quantitatively address the following questions: up to which distances can such a scheme be efficient and how sensitive is it to external perturbations? The omnidirectional but stationary (non-lossy) nature of the near field makes this mechanism suitable for mobile wireless receivers. It could therefore have a variety of possible applications including for example, placing a source (connected to the wired electricity network) on the ceiling of a factory room, while devices (robots, vehicles, computers, or similar) are roaming freely within the room. Other possible applications include electric-engine buses, RHDs. and perhaps even nano-robots.

## 2. Range and rate of coupling

The range and rate of the proposed wireless energy-transfer scheme are the first subjects of examination, without considering yet energy drainage from the system for use into work. An appropriate analytical framework for modeling this resonant energy-exchange is that of the well-known coupled-mode theory (CMT) [8] In this picture, the field of the system of two resonant objects 1 and 2 is approximated by $\mathbf{F}(\mathbf{r},t) \approx a_1(r)\mathbf{F}_1(\mathbf{r}) + a_2(n\mathbf{F}_2(\mathbf{r})$, where $\mathbf{F}_{1,2}(\mathbf{r})$ are the eigenmodes of 1 and 2 alone, and then the field amplitudes $a_1(t)$ and $a_2(t)$ can be shown [8] to satisfy, to lowest order:

$$\frac{da_1}{dt} = -i(\omega_1 - i\Gamma_1)a_1 + i\kappa a_2$$
$$\frac{da_2}{dt} = -i(\omega_2 - i\Gamma_2)a_2 + i\kappa a_1 \quad , \tag{1}$$

where $\omega_{1,2}$ are the individual eigenfrequencies, $\Gamma_{1,2}$ are the resonance widths due to the objects intrinsic (absorption, radiation, etc.) losses, and $\kappa$ is the coupling coefficient. Eqs. (1) show that at exact resonance ($\omega_1 = \omega_2$ and $\Gamma_1 = \Gamma_2$), the normal modes of the combined system are split by $2k$; the energy exchange between the two objects takes place in time $\sim\pi/2k$ and is nearly perfect, apart for losses, which are minimal when the coupling rate is much faster than all loss rates ($\kappa \gg \Gamma_{1,2}$),[1] It is exactly this ratio $\kappa/\sqrt{\Gamma_1\Gamma_2}$ that we will set as our figure-of-merit for any system under consideration for wireless energy-transfer, along with the distance over which this ratio can be achieved. The desired optimal regime $\kappa/\sqrt{\Gamma_1\Gamma_2} \gg 1$ is called "strong-coupling" regime.

Consequently, our energy-transfer application requires resonant modes of high $Q = \omega/2\Gamma$ for low (slow) intrinsic-loss rates $\Gamma$, and this is why we propose a scheme where the coupling is implemented using, not the lossy radiative far-field, but the evanescent (non-lossy) stationary near-field. Furthermore, strong (fast) coupling rate $\kappa$ is required over distances larger than the characteristic sizes of the objects, and therefore, since the extent of the near-field into the air surrounding a finite-sized resonant object is set typically by the wavelength (and quantified rigorously by the "radiation caustic"), this mid-range non-radiative coupling can only be achieved using resonant objects of subwavelength size, and thus significantly longer evanescent field-tails. This is a regime of operation that has *not* been studied extensively, since one usually prefers short tails to minimize interference with nearby devices. As will be seen in examples later on, such subwavelength resonances can often be accompanied with a high radiattion-$Q$, so this will typically be the appropriate choice for the possibly-mobile resonant device-object *d.* Note, though, that the resonant source-object *s* will in practice often be immobile and with less stringent restrictions on its allowed geometry and size, which can be therefore chosen large enough that the near-field extent is not limited by the wavelength (using for example waveguides with guided modes tuned close to the "light line" in air for slow exponential decay therein).

The proposed scheme is very general and *any* type of resonant structure (e.g. electromagnetic, acoustic, nuclear) satisfying the above requirements can be used for its implementation. As examples and for definiteness. we choose to work with two well-known, but quite different, electromagnetic resonant systems: dielectric disks and capacitively-loaded conducting-wire loops. Even without optimization, and despite their simplicity, both will be shown to exhibit acceptably good performance.

### 2.1. Dielectric disks

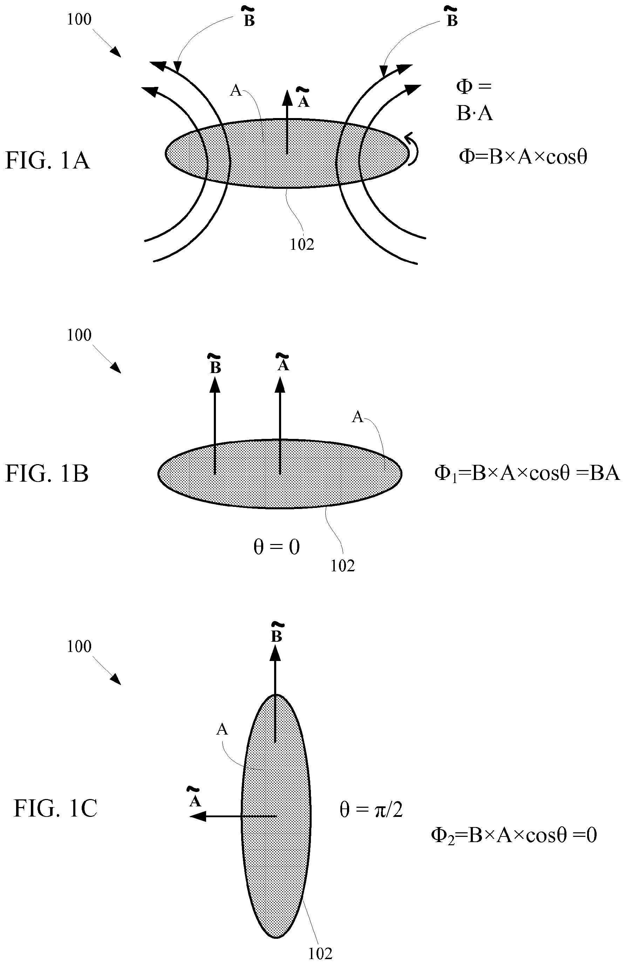

Consider a 2D dielectric disk object of radius $r$ and relative permittivity $s$ surrounded by air that supports high-$Q$ "whispering-gallery" resonant modes (Fig. 1). The loss mechanisms for the energy stored inside such a resonant system are radiation into free space and absorption inside the disk material. High-$Q^{rad}$ and long-tailed subwavelength resonances can be achieved, only when the dielectric permittivity $\varepsilon$ is large and the azimuthal field variations are slow (namely of small principal number $m$). Material absorption is related to the material loss tangent: $Q^{abs} \sim \text{Re}(\varepsilon)/\text{Im}(\varepsilon)$. Mode-solving calculations for this type of disk resonances were peformed using two independent methods: numerically, 2D dinite-difference frequency-domain (FDFU) simulations (which solve Maxwell's Equations in frequency domain exactly apart for spatial discretization) were conducted with a

| single disk | $\lambda / r$ | $Q^{abs}$ | $Q^{rad}$ | $Q$ |
|---|---|---|---|---|
| Re{$\varepsilon$}=147.7, m=2 | 20.01 (20.00) | 10103 (10075) | 1988 (1992) | 1661 (1663) |
| Re{$\varepsilon$}=65.6, m=3 | 9.952 (9.950) | 10098 (10087) | 9078 (9168) | 4780 (4802) |

resolution of 30 pts/f: analytically, standard separation of variables (SV) in polar coordinates was used. The results for two TE-polarized dielectric-disk subwavelength modes of $\lambda/r \geq 10$ are presented in Fig. 1. The two methods have excellent agreement and imply that for a properly designed resonant low-loss-dielectric object values of $Q^{rad} \geq 2000$ and $Q^{abs} \sim 10.000$ should be achievable.

Note that the required values of $\varepsilon$, shown in Fig. 1, might at first seem unrealistically large. However, not only are there in the microwave regime (appropriate for meter-range coupling applications) many materials that have both reasonably high enough dielectric constants and low losses (e.g. Titania: $\varepsilon \approx 96$, Im{$\varepsilon$}/$\varepsilon \approx 10^{-3}$; Barium tetratitanate: $\varepsilon \approx 37$, Im[$\varepsilon$]/$\varepsilon \approx 10^{-4}$; Lithium tantalite; $\varepsilon \approx 40$, Im{$\varepsilon$}$\varepsilon \approx 10^{-4}$; etc.) [9,10], but also $\varepsilon$ could signify instead the effective index of other known subwavelength ($\lambda/r \gg 1$) surface-wave systems, such as surface-plasmon modes on surfaces of metal-like (negative-$\varepsilon$) materials [11] or metallo-dielectric photonic crystals [12].

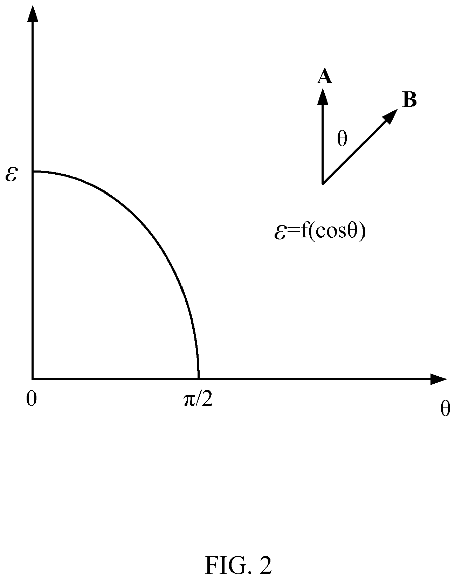

To calculate now the achievable rate of energy transfer between two disks 1 and 2. we place them at distance $D$ between their centers (Fig. 2). Numerically, the FDFD mode-sol-ver emulations give $\kappa$ through the frequency splitting (=$2\kappa$) of the normal modes of the combined system, which are even and odd superpositions of the initial single-disk modes; analytically, using the expressions for the separation-of-variables eigenfields $\mathbf{E}_{1,2}(\mathbf{r})$ CMT gives $\kappa$ through

$$\bar{\kappa} = \omega_1/2 \cdot \int d^3r \varepsilon_2(\mathbf{r})\mathbf{E}_2^*(\mathbf{r})\mathbf{E}_1(\mathbf{r}) / \int d^3r \varepsilon(\mathbf{r})|\mathbf{E}_1(\mathbf{r})|^2,$$

where $\varepsilon_j(\mathbf{r})$ and $\varepsilon(\mathbf{r})$ are the dielectric functions that describe only the disk $j$ (minus the constant $\varepsilon_v$ background) and the whole space respectively. Then, for medium distances $D/r$ = 10-3 and for non-radiative coupling such that $D < 2r_C$, where $r_C = m\lambda/2\pi$ is the radius of the radiation caustic, the two methods agree very well. and we finally find (Fig. 2) coupling-to-Joss ratios in the range $\kappa/T \sim$ 1-50. Although the achieved figure-of-merit values do not fall in the ideal "strong-coupling" operating regime $\kappa/\Gamma \gg$ 1, they are still large. enough to be useful for applications, as we will see later on.

### 2.2. Capacitively-loaded conducting-wire loops

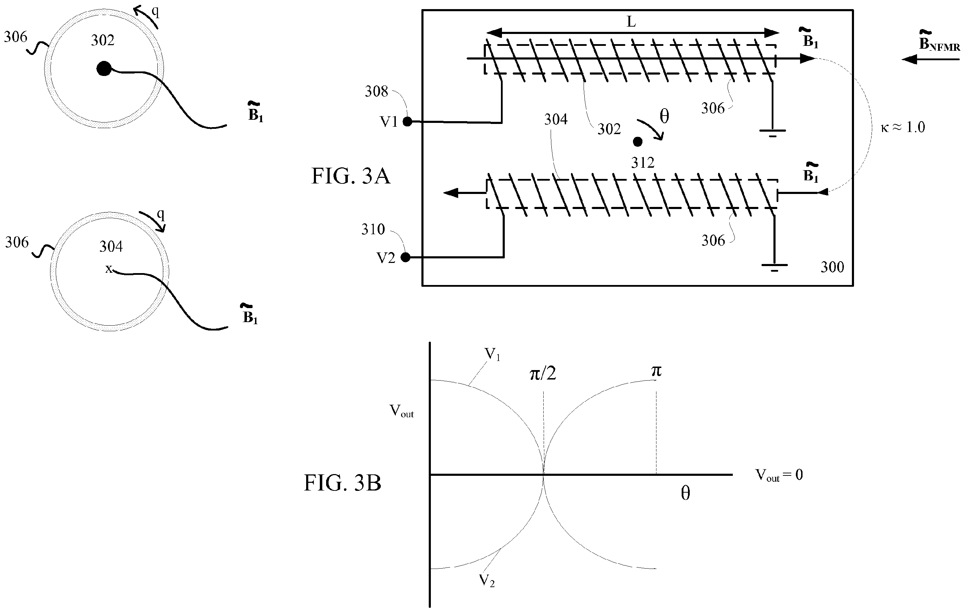

Consider a loop of radius $r$ of conducting wire with circular cross-section of radius $a$ connected to a pair of conducting parallel plates of area $A$ spaced by distance $d$ via a dielectric of relative permittivity $\varepsilon$ and everything surrounded by air (Fig. 3). The wire has inductance $L$, the plates have capacitance $C$ and then the system has a resonant mode, where the nature of the resonance lies in the periodic exchange of energy from the electric field inside the capacitor, due to the voltage across it, to the magnetic field in free space, due to the current in the wire. Losses in this resonant system consist of ohmic loss $R_{abs}$ inside the wire and radiative loss $R_{rad}$ into free space. Mode-solving calculations for this type of $RLC$-circuit resonances were performed using again two independent methods: numerically, 3D finite-element frequency-domain (FEFD) simulations (which solve Max-well's Equations in frequency domain exactly apart for spatial discretization) were conducted [13], in which the boundaries of the conductor were modeled using a complex impedance

$\eta_c = \sqrt{\mu_c\omega/2\sigma}$ boundary condition, valid as long as $\eta_c/\eta_0 \ll$ 1 [14] (<10-5 for copper in the microwave), where $\mu_o$,

$\varepsilon_0$ and $\eta_o = \sqrt{\mu_o/\varepsilon_o}$ are the magnetic permeability, electric permittivity and impedance of free space and $\sigma$ is the conductivity of the conductor; analytically, the formulas $L = \mu_o r[\ln(8r/a) - 2]$ [15] and $C = \varepsilon_0\varepsilon A/d$, and, in the desired subwavelength-loop ($r \ll \lambda$) limit, the quasi-static formulas $R_{abs} \approx \eta_c r/a$ (which takes skin-depth effects into account) and $R_{rad} \approx \pi/6\eta_o\{r/\lambda\}^4$ [15] were used to determine

| two disks | $D/r$ | $Q^{rad}$ | $Q = \omega/2\Gamma$ | $\omega/2\kappa$ | $\kappa/\Gamma$ |
|---|---|---|---|---|---|
| $Re(\varepsilon)\sim147.7$, $m\sim2$ | 3 | 2478 | 1989 | 46.9 (47.5) | 42.4 (35.0) |
| $\lambda/r \approx 20$ | 5 | 2411 | 1946 | 298.0 (298.0) | 6.5 (5.6) |
| $Q^{abs} \approx 10093$ | 7 | 2196 | 1804 | 769.7 (770.2) | 2.3 (2.3) |
| | 10 | 2017 | 1681 | 1714 (1601) | 0.98 (1.04) |
| $Re(\varepsilon)\sim65.6$, $m\sim3$ | 3 | 7072 | 4455 | 144 (146) | 30.9 (34.3) |
| $\lambda/r \approx 10$ | 5 | 9240 | 4824 | 2242 (2083) | 2.2 (2.3) |
| $Q^{abs} \approx 10006$ | 7 | 9187 | 4810 | 7485 (7417) | 0.64 (0.65) |

Fig. 2. *Plot.* Systems of two same 2D high-$\varepsilon$ disks of radius $r$ (yellow) for medium-distance $D$ coupling between them, along with the electric field of the normal mode, which is an even superposition of the single-disk modes of Fig. 1, superimposed (red/white/blue). Note that there is also a normal mode, which is an odd superposition of the single-disk modes of Fig. 1 (not shown). *Table.* Numerical FDFD (and in parentheses analytical CMT) results for the *average* of the wavelength and loss rates of the two normal modes (individual values not shown), and also the coupling rate and "strong/weak-coupling" figure-of-merit as a function of the coupling distance $D$, for the two cases of disk modes presented in Fig. 1. Only distances for non-radiative ($D < 2r_C$) coupling are considered. Note that the average $\Gamma^{rad}$ (and thus total $\Gamma$) shown are slightly different from the single-disk value of Fig. 1, due to far-field interference effects present for the two normal modes, for which CMT cannot make predictions and this is why analytical results for $\Gamma^{rad}$ are not shown but the single-disk value is used. *( The specific parameters of the plot are highlighted with bold in the table.)* (For interpretation of the references to color in this figure legend, the reader is referred to the web version of this paper.)

the resonant frequency $\omega = 1/\sqrt{LC}$ and its quality factors $Q^{abs} = \omega L/R_{abs}$ and $Q^{rad} = \omega L/R_{rad}$. By tuning the capacitance and thus the resonant frequency, the total $Q$ becomes highest for some optimal frequency determined by the loop parameters: at low frequencies it is dominated by ohmic loss and at high frequencies by radiation. The results for two sub-wavelength modes of $\lambda/r \geq 70$ (namely highly suitable for near-field coupling and really in the quasi-static limit) at this optimal frequency are presented in Fig. 3. The two methods are again in very good agreement and show that expected quality factors in the microwave are $Q^{abs} \geq 1000$ and $Q^{rad} \geq 10,000$.

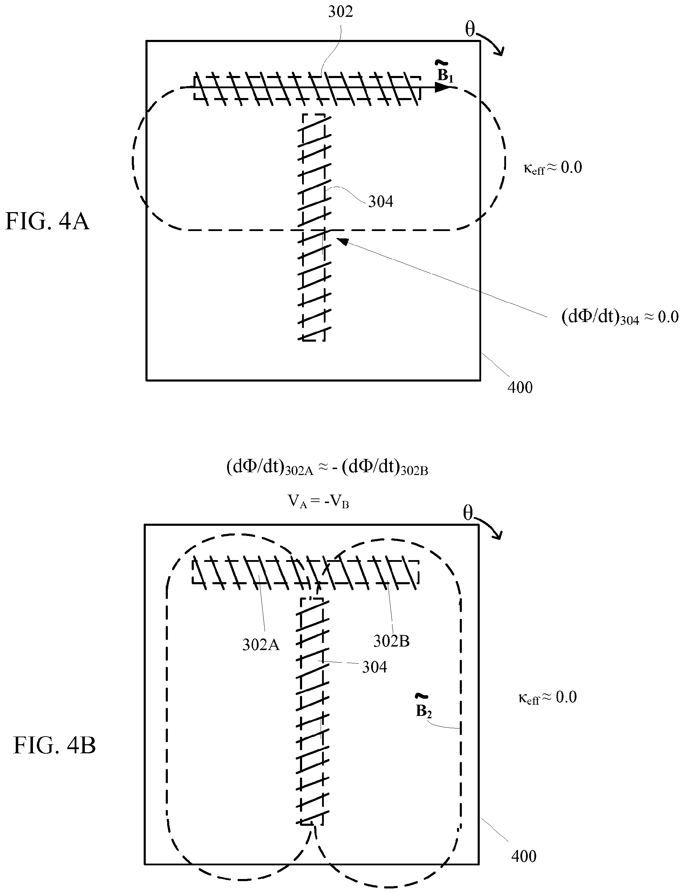

For the rate of energy transfer between two loops 1 and 2 at distance $D$ between their centers (fig. 4): numerically, the FEFD mode-solver simulations give $\kappa$ again through the frequency splitting i=2$\kappa$i of the normal modes of the combined system; analytically, $\kappa$ is

| single loop | $\lambda / r$ | $Q^{rad}$ | $Q^{abs}$ | $Q = \omega/2\Gamma$ |
|---|---|---|---|---|
| r=30cm, a=2cm $\varepsilon$=10, A=138cm$^2$, d=4mm | 111.4 (112.4) | 29546 (30512) | 4886 (5117) | 4193 (4381) |
| r=10cm, a=2mm $\varepsilon$=10, A=3.14cm$^2$, d=1mm | 69.7 (70.4) | 10702 (10727) | 1545 (1604) | 1350 (1395) |

Fig. 3. *Plot.* A wire loop of radius *r* connected to a pair of *d*-spaced parallel plates (shown in yellow) surrounded by air, along with a slice of the magnetic field (component parallel to the axis of the circular loop) of their resonant mode superimposed (shown in red/white/blue in regions of positive/zero/negative field respectively). *Table.* Numerical FEFD (and in parentheses analytical) results for the wavelength and absorption, radiation and total loss rates, for two different cases of subwavelength-loop resonant modes. Note that for conducting material copper ($\sigma$ = 5.998 × 10$^7$ S/m) was used. (*The specific parameters of the plot are highlighted with bold in the table.*) (For interpretation of the references to color in this figure legend, the reader is referred to the web version of this paper.)

given by $\kappa = \omega M/2\sqrt{L_1 L_2}$, where $M$ is the mutual inductance of the two loops, which, in the quasi-static limit $r \ll D$ $\ll \lambda$ and for the relative orientation shown in Fig. 4. is $M \approx \pi/2 \mu_0 (r_1 r_2)^2/D^3$ [14], which means that $\omega/2\kappa \sim (D/\sqrt{r_1 r_2})^3$. Then, and for medium distances $D/r = 10$-3. the two methods agree well, and we finally find (Fig. 4) coupling-to-loss ratios, which peak at a frequency between those where the single-loop $Q_{1,2}$ peak and are in the range $\kappa/\Gamma \sim$ 0.5-50.

It is important to appreciate the difference between such a resonant-coupling inductive scheme and the well-known non-resonant inductive scheme for energy transfer. Using CMT it is easy to show that, keeping the geometry and the energy stored at the source fixed, the resonant inductive mechanism allows for $\sim Q^2$ ($\sim 10^6$) times more powder delivered for work at the device than the traditional non-resonant mechanism. This is why only close-range contact-less medium-power ($\sim$W) transfer is possible with the latter [2,3]. while with resonance either dose-range but large-power ($\sim$kW) transfer is allowed [4.5] or, as currently proposed, if one also ensures operation in the strongly-coupled regime, medium-range and medium-power transfer is possible. Capacitively-loaded conductive loops are actually being widely used also as resonant antennas (for example in cell phones), but those operate in the far-field regime with $D/r \gg 1, r/\lambda \sim$ 1. and the radiation $Q$'s are intentionally designed to be small to make the antenna efficient, so they are not appropriate for energy transfer.

| two loops | $D/r$ | $Q^{rad}$ | $Q = \omega/2\Gamma$ | $\omega/2\kappa$ | $\kappa/\Gamma$ |
|---|---|---|---|---|---|
| r=30cm, a=2cm $\varepsilon$=10, A=138cm², d=4mm $\lambda/r \approx 112$ $Q^{abs} \approx 4886$ | 3 | 30729 | 4216 | 62.6 (63.7) | 67.4 (68.7) |
| | 5 | 29577 | 4194 | 235 (248) | 17.8 (17.6) |
| | 7 | **29128** | **4185** | **589 (646)** | **7.1 (6.8)** |
| | 10 | 28833 | 4177 | 1539 (1828) | 2.7 (2.4) |
| r=10cm, a=2mm $\varepsilon$=10, A=3.14cm², d=1mm $\lambda/r \approx 70$ $Q^{abs} \approx 1540$ | 3 | 10955 | 1355 | 85.4 (91.3) | 15.9 (15.3) |
| | 5 | 10740 | 1351 | 313 (356) | 4.32 (3.92) |
| | 7 | 10759 | 1351 | 754 (925) | 1.79 (1.51) |
| | 10 | 10756 | 1351 | 1895 (2617) | 0.71 (0.53) |

Fig. 4. *Plot.* System of two same wire loops connected to parallel plates (yellow) for medium-distance $D$ coupling between them, along with a slice of the magnetic field of the even normal mode superimposed (red/white/blue). Note that there is also an odd normal mode (not shown). *Table.* Numerical FEFD (and in parentheses analytical) results for the *average* wavelength and loss rates of the two normal modes (individual values not shown), and also the coupling rate and "strong/weak-coupling" figure-of-merit as a function of the coupling distance $D$, for the two cases of modes presented in Fig. 3. Note that the average $\Gamma^{rad}$ shown are again slightly different from the single-loop value of Fig. 3, due to far-field interference effects present for the two normal modes, which again the analytical model cannot predict and thus analytical results for $\Gamma^{rad}$ are not shown but the single-loop value is used. (*The specific parameters of the plot are highlighted with bold in the table.*) (For interpretation of the references to color in this figure legend, the reader is referred to the web version of this paper.)

### 3. influence of extraneous object

Clearly, the success of the proposed resonance-based wireless energy-transfer scheme depends strongly on the robustness of the objects' resonances. Therefore, their sensitivity to the near presence of random non-resonant extraneous objects is another aspect of the proposed scheme that requires analysis. The appropriate analytical model now is that, of perturbation theory (PT) [8], which suggests that in the presence of an extraneous object $e$ the field amplitude $a_1(t)$ inside the resonant object 1 satisfies, to first order:

$$\frac{da_1}{dt} = -i(\omega_1 - i\Gamma_1)a_1 + i(\kappa_{11-e} + i\Gamma_{1-e})a_1 \qquad (2)$$

where again $\omega_1$ is the frequency and $\Gamma_1$ the intrinsic (absorption, radiation, etc.) loss rate, while $\kappa_{11-e}$ is the frequency shift induced onto 1 due to the presence of $e$ and $\Gamma_{1-e}$ is the extrinsic due to $e$ (absorption inside $e$, scattering from $e$, etc.) loss rate[2]. The frequency shift is a problem that can be "fixed" rather easily by applying to every device a feedback mechanism that corrects its frequency (e.g. through small chants in geometry) and matches it to that of the source. However, the extrinsic loss can be detrimental to the functionality of the energy-transfer scheme, because it cannot be remedied, so the total loss rate $\Gamma_{(x)} = \Gamma_r + \Gamma_{1-x}$ and the corresponding figure-of-merit

$$\kappa_{[e]} / \sqrt{\Gamma_{1[e]}\Gamma_{2[e]}},$$

where $\kappa_{[e]}$ the perturbed coupling rate, must be quantified.

*3.1. Dielectric disks*

In the first example of resonant objects that we have considered, namely dielectric disks, small, low-index, low-material-loss or far-away stray objects will induce small scattering and absorption. In such cases of small perturbations these extrinsic loss mechanisms can be quantified using respectively the analytical first-order PT formulas

$$\Gamma_{1-e}^{rad} \propto \omega_1 \cdot \int d^3r \, Re\{\varepsilon_e(\mathbf{r})\}^2 |E_1(\mathbf{r})|^2 / U$$

and

$$\Gamma_{1-e}^{abs} = \omega_1 / 4 \cdot \int d^3r \, Im\{\varepsilon_e(\mathbf{r})\} |E_1(\mathbf{r})|^2 / U,$$

where

$$U = 1/2 \cdot \int d^3r \, \varepsilon(\mathbf{r}) |E_1(\mathbf{r})|^2$$

is the total resonant electromagnetic energy of the unperturbed mode. As one can see, both of these losses depend on the *square* of the resonant electric field tails $E_1$ at the site of the extraneous object. In contrast, the coupling rate from object 1 to another resonant object 2 is, as stated earlier.

$$\kappa = \omega_1 / 4 \cdot \int d^3r \, \varepsilon_2(\mathbf{r}) E_2^*(\mathbf{r}) E_1(\mathbf{r}) / U$$

and depends *linearly* on the field tails $E_1$ of 1 inside 2. This difference in scaling gives us confidence that, for exponentially small field tails, coupling to other resonant objects should be much faster than all extrinsic loss rates ($\kappa \gg \Gamma_{1-e}$), at least for small perturbations, and thus the energy-transfer scheme is expected to be sturdy for this class of resonant dielectric disks.

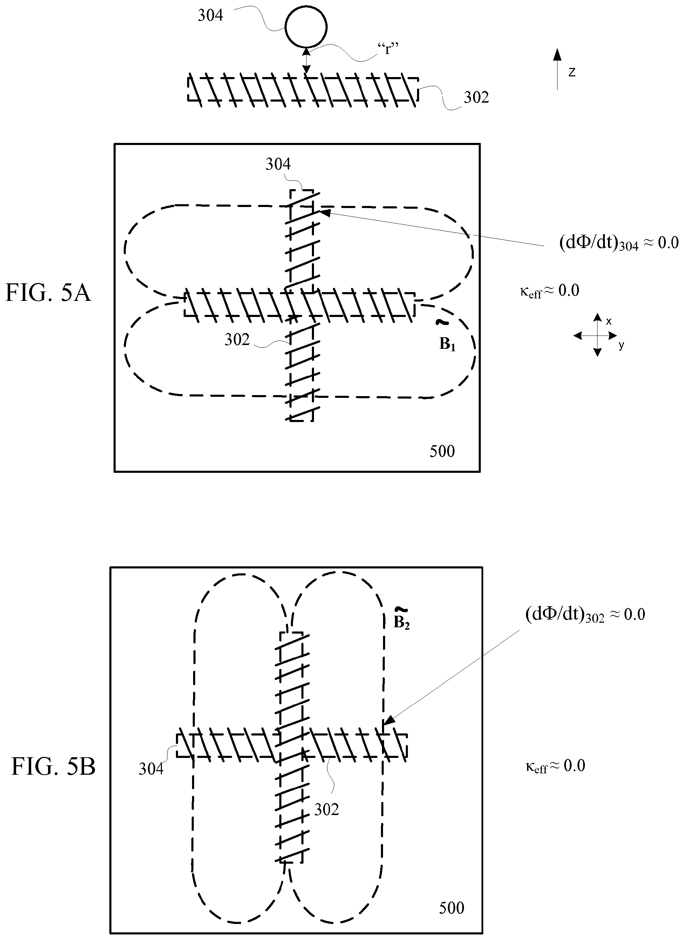

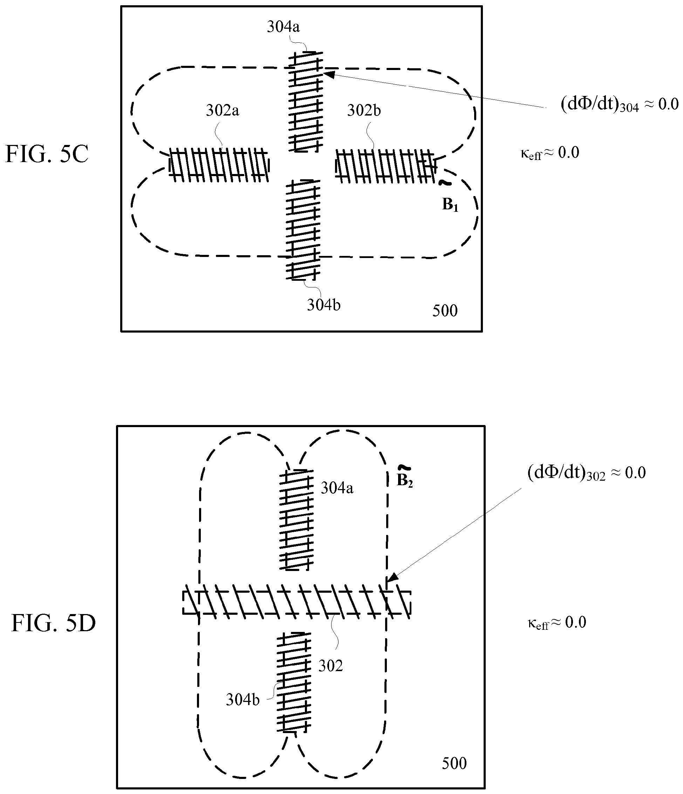

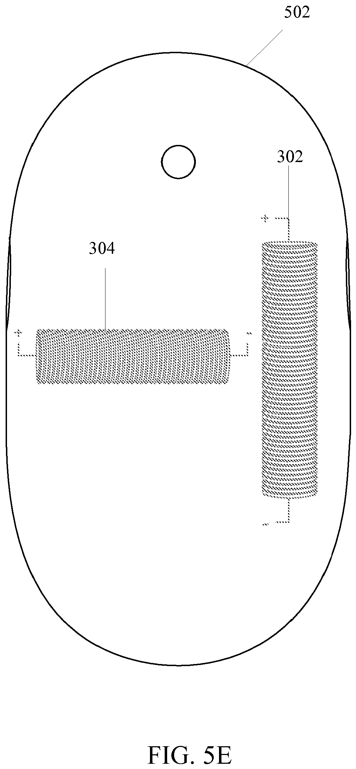

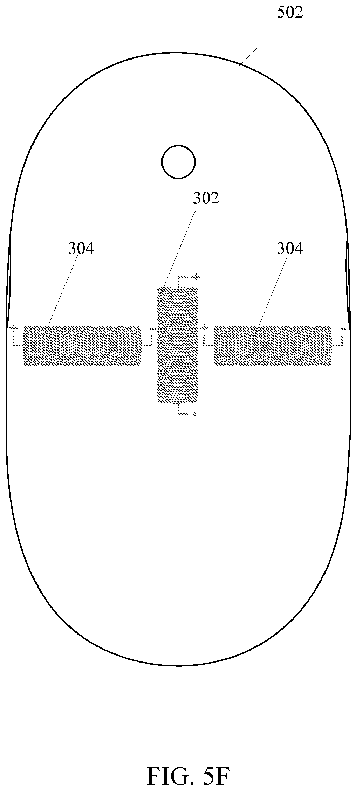

However, we also want to examine certain possible situations where extraneous objects cause perturbations too strong to analyze using the above first-order PT approach. For example, we place a dielectric disk *c* close to another off-resonance object of large Re{$\varepsilon$}, Im{$\varepsilon$} and of same size but different shape (such as a human being *h*), as shown in Fig. 5a, and a roughened surface of large extent but of small Re{$\varepsilon$}, Im{$\varepsilon$} (such as a wall *w*), as shown in Fig. 5b. For distances $D_{h/w}/r = 10^{-3}$ between the disk-center and the "humane"-center/"wall", the numerical FDFD simulation results presented in Fig. 5

$$Q_c^{abs} \sim 10,000$$

suggest that

$$Q_{c[h]}^{rad}, Q_{c[w]}^{rad} \geq 1000$$

(instead of the initial

$$Q_c^{\mathrm{rad}} \geq 2000),$$

(naturally unchanged),

$$Q_{c-h}^{\mathrm{abs}} \sim 10^5 - 10^2,$$

and

$$Q_{c-w}^{\mathrm{abs}} \sim 10^5 - 10^4,$$

namely the disk resonance seems to be fairly robust, since it is not detrimentally disturbed by the presence of extraneous objects, with the exception of the *very* close proximity of high-loss objects [16].

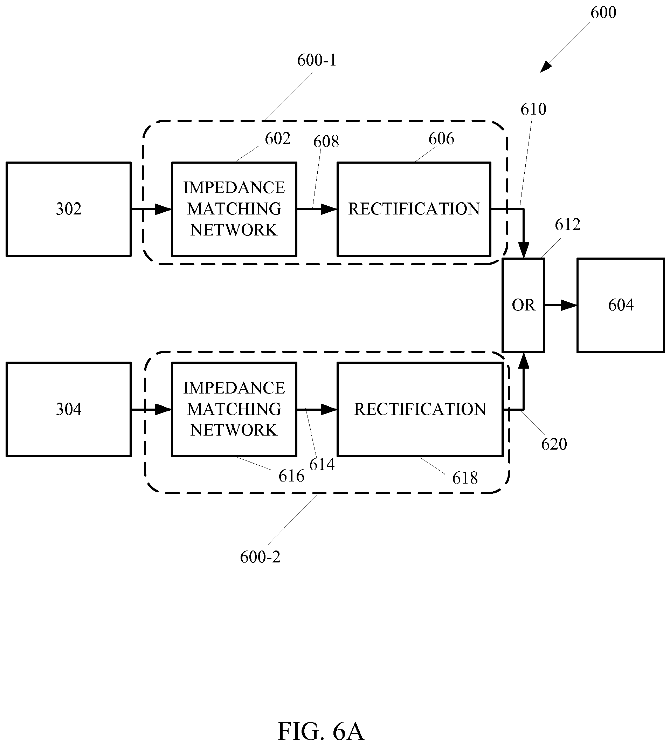

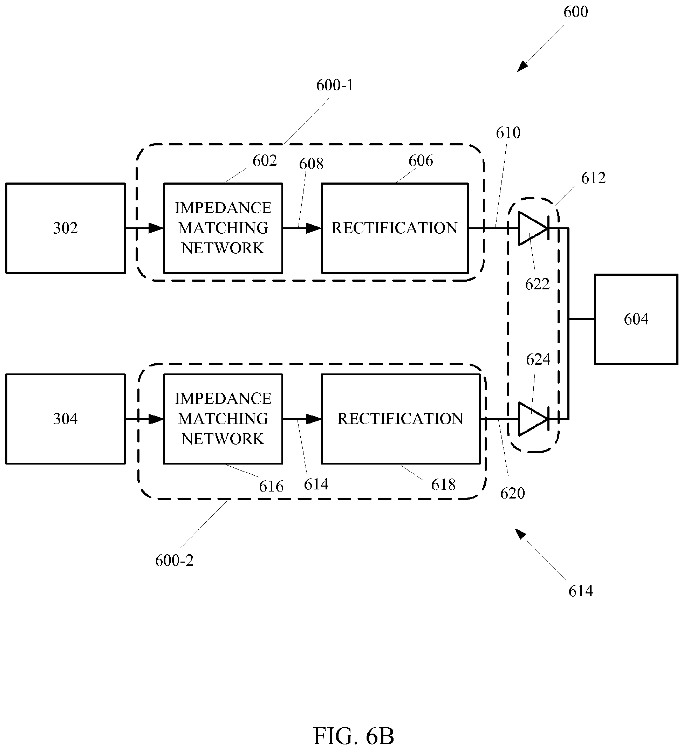

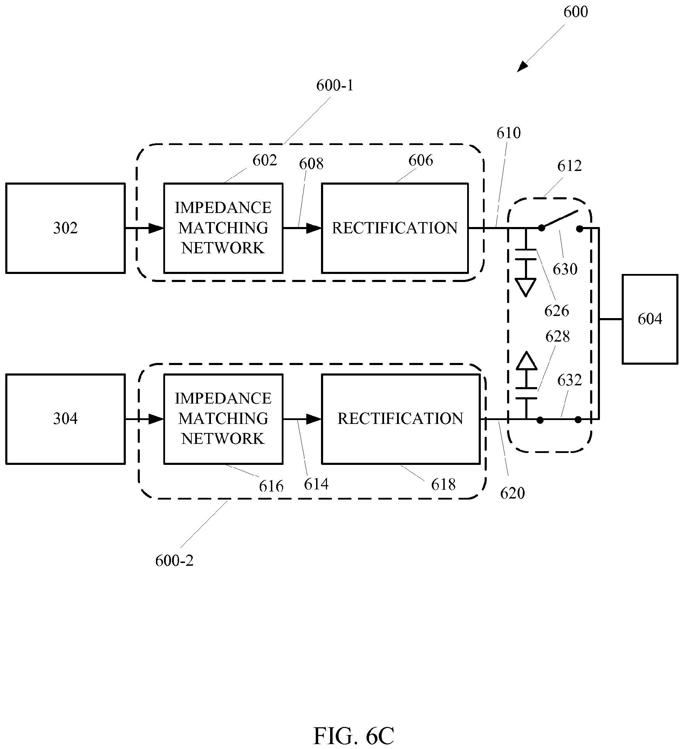

To examine the influence of large perturbations on an entire energy-transfer system we consider two resonant disks in the close presence of both a "human" and a "wall". The numerical FDFD simulations show that the system performance deteriorates from $\kappa / \Gamma_c \sim$ 1-50 (Fig. 2) to $\kappa_{[hw]}/\Gamma_{c[hw]} \sim$ 0.5-10 (Fig. 6). i.e. only by acceptably small amounts.

A. Karalis et al. / Annals of Physics 323 (2008) 34-48                    43

Fig. 5. *Plots.* A disk (yellow) in the proximity at distance $D_{k/\kappa}$ of an extraneous object (yellow): (a) a high $\varepsilon = 49 + 16i$ (which is large but actually appropriate for human muscles in the GHz regime [16]) square object of same size (area) with the disk, and (b) a large roughened surface of $\varepsilon = 2.5 + 0.05i$ (appropriate for ordinary materials such as concrete, glass, plastic, wood [16]), along with the electric field of the disk's perturbed resonant mode superimposed (red/white/blue). *Tables.* Numerical FDFD results for the parameters of the disk's perturbed resonance, including absorption rate inside the extraneous object and total (including scattering from the extraneous object) radiation-loss rate, for the two cases of disk modes presented in previous figures. Note that again disk-material loss-tangent Im{ε}/Re{ε}~10⁻⁴ was used, and that $Q_{c[hw]}^{rad}$ is again different (decreased or even increased) from the single-disk $Q_c^{rad}$ of Fig. 1, due to (respectively constructive or destructive) interference effects this time between the radiated and strongly scattered far-fields. (*The specific parameters of the plots are highlighted with bold in the tables.*) (For interpretation of the references to color in this figure legend, the reader is referred to the web version of this paper.)

### 3.2. Capacitively-loaded conducting-wire loops

In the second example of resonant objects that we have considered, the conducting-wire loops, the influence of extraneous objects on the resonances is nearly absent. The reason is that, in the quasi-static regime of operation (*r*

« $\lambda$) that we are considering, the near field in the air region surrounding the loop is predominantly magnetic (since the electric field is localized inside the capacitor), therefore extraneous non-metallic objects $c$ that could interact with this field and act as a perturbation to the resonance are those having significant magnetic properties (magnetic permeability $\mathbf{Re}[\mu] > 1$ or magnetic loss $\mathrm{Im}\{\mu\} > 0$). Since almost all every-day materials are non-magnetic, they respond to magnetic fields in the same way as free space, and thus will not disturb the resonance of a conducting-wire loop. To get only a rough estimate of this disturbance, we use the PT formula, stated earlier.

| two disks with "human" and "wall" | $D/r$ | $Q_{c-h}^{abs}$ | $Q_{c-w}^{abs}$ | $Q_{[h+w]}^{rad}$ | $Q_{total} = \omega/2\Gamma_{[h+w]}$ | $\omega/2\kappa_{[h+w]}$ | $\kappa_{[h+w]}/\Gamma_{c,[h+w]}$ |
|---|---|---|---|---|---|---|---|
| $\mathrm{Re}\{\varepsilon\} = 147.7, m = 2$ | 3 | 3300 | 12774 | 536 | 426 | 48 | 8.8 |
| $\lambda/r \approx 20$ | 5 | 5719 | 26333 | 1600 | 1068 | 322 | 3.3 |
| $Q^{abs} \approx 10100$ | 7 | 13248 | 50161 | 3542 | 2097 | 973 | 2.2 |
| | 10 | 18447 | 68460 | 3624 | 2254 | 1768 | 1.3 |
| $\mathrm{Re}\{\varepsilon\} = 65.6, m = 3$ | 3 | 2058 | 36661 | 6764 | 1328 | 141 | 9.4 |
| $\lambda/r \approx 10$ | 5 | 72137 | 90289 | 11945 | 4815 | 2114 | 2.3 |
| $Q^{abs} \approx 10100$ | 7 | 237822 | 129094 | 12261 | 5194 | 8307 | 0.6 |

Fig. 6. *Plot.* System of two same disks (yellow) for medium-distance $D$ coupling between them in the proximity at equal distance $D$ of two extraneous objects (yellow): both a high $\varepsilon = 49 + 16i$ square object of same size (area) with the disks and a large roughened surface of $\varepsilon = 2.5 + 0.05i$, along with the electric field of the system's perturbed even normal mode superimposed (red/white/blue). *Table.* Numerical FDFD results for the *average* wavelength and loss rates of the system's perturbed two normal modes (individual values not shown), and also the perturbed coupling rate and "strong/weak-coupling" figure-of-merit as a function of the distance $D$, for the two cases of disk modes presented in previous Figures. Only distances for non-radiative ($D < 2r_c$) coupling are considered. Note once more that the average $\Gamma^{rad}$ takes into account interference effects between all radiated and scattered far-fields. (*The specific parameters of the plot are highlighted with* bold *in the table.*)(For interpretation of the references to color in this figure legend, the reader is referred to the web version of this paper.)

$$\Gamma_{[c-r]}^{abs} = \omega_1/4 \cdot \int d^3r \, \mathrm{Im}\{\varepsilon_c(r)\}|E_1(r)|^2/U$$

with the numerical results for the field of an example like the one shown in the plot of Fig. 4 and with a rectangular object of dimensions 30 cm × 30 cm × 1.5 m and permittivity $\varepsilon = 49 + 16i$ (human muscles) residing between the loops and almost standing on top of one capacitor (~3 cm away from it) and find

$$Q_{c-h}^{abs} \sim 10^5$$

and for ~10 cm away

$$Q^{abs}_{c\to h} \sim 5 \times 10^5.$$

Thus, for ordinary distances (~1 m) and placements (not immediately on top of the capacitor) or for most ordinary extraneous objects $e$ of much smaller loss-tangent, we conclude that it is indeed fair to say that

$$Q^{abs}_{c\to e} \to \infty$$

and that $\kappa_{(e)}/\Gamma_{[e]} \sim \kappa/\Gamma \sim$ 0.5-50. The only perturbation that is expected to affect these resonances is a close proximity of large metallic structures.

An extremely important implication of this fact relates to safety considerations for human beings. Humans are also non-magnetic andean sustain strong magnetic fields without undergoing any risk. A typical example, where magnetic fields $B \sim 1$ T are safely used on humans, is the magnetic resonance imaging (MRI) technique for medical testing. In contract, the magnetic near-field required by our scheme in order to provide a few Watts of power to devices is only $B \sim 10^{-4}$ T. which is actually comparable to the magnitude of the Earth's magnetic field. Since, as explained above, a strong electric near-field is also not present and the radiation produced from this non-radiative scheme is minimal, it is reasonable to expect that our proposed energy-transfer method should be safe for living organisms.

In comparison of the two classes of resonant systems under examination, the strong immunity to extraneous objects and the absence of risks for humans probably makes the conducting-wire loops the preferred choice for many real-world applications; on the other hand, systems of disks (or spheres) of high (effective) refractive index have the advantage that they are also applicable to much smaller length-scales (for example in the optical regime dielectrics prevail, since conductive materials are highly lossy).

### 4. Efficiency of energy-transfer scheme

Consider again the combined system of a resonant source $s$ and device $d$ in the presence of a set of extraneous objects $e$, and let us now study the efficiency of this resonance-based energy-transfer scheme, when energy is being drained from the device at rate $\Gamma_{work}$ for use into operational work. The coupled-mode-theory equation for the device field-amplitude is

$$\frac{da_d}{dt} = -i(\omega - i\Gamma_{d[e]})a_d + i\kappa_{[e]}a_s - \Gamma_{work}a_d. \tag{3}$$

where

$$\Gamma_{d[e]} = \Gamma^{rad}_{d[e]} + \Gamma^{abs}_{d[e]} = \Gamma^{rad}_{d[e]} + (\Gamma^{abs}_d + \Gamma^{abs}_{d\to e})$$

is the net perturbed-device loss rite, and similarly we define $\Gamma$ for the perturbed-source. Different temporal schemes can be used to extract power from the device (e.g. steady-state continuous-wave drainage, instantaneous drainage at periodic times and so on) and their efficiencies exhibit different dependence on the combined system parameters. Here, we assume steady state, such that the field amplitude inside the source is maintained constant, namely $a_x(t) = A_s e^{-i\omega t}$, so then the field amplitude inside the device is $a_x(t) = A_d e^{-i\omega t}$, with $A_d/A_s = i\kappa_{[e]}/(\Gamma_{d[e]} + \Gamma_{work})$. The various time-averaged powers of interest are then: the useful extracted power is $P_{work} = 2\Gamma_{work}|A_d|^2$, the radiated (including scattered) power is $P_{rad} = 2\Gamma^{rad}_{s[e]}|A_s|^2 +$

$$2\Gamma^{rad}_{d[e]}|A_d|^2,$$

the power absorbed at the source/device is

$$P_{s/d} = 2\Gamma_{s/d}^{abs}|A_{s/d}|^2,$$

and at the extraneous objects

$$P_e = 2\Gamma_{s\to e}^{abs}|A_s|^2 + 2\Gamma_{d\to e}^{abs}|A_d|^2.$$

From energy conservation, the total time-averaged power entering the system is $P_{total} = P_{work} + P_{rad} + P_s + P_d + P_e$. Note that the reactive powers, which are usually present in a system and circulate stored energy around it, cancel at resonance (which can be proven for example in electromagnetism from Poynting's Theorem [14]) and do not influence the power-balance calculations. The working efficiency is then:

$$\eta_{work} \equiv \frac{P_{work}}{P_{total}} = \frac{1}{1 + \frac{\Gamma_{d[e]}}{\Gamma_{work}} \cdot \left[1 + \frac{1}{fom_{[e]}^2}\left(1 + \frac{\Gamma_{work}}{\Gamma_{d[e]}}\right)^2\right]}, \tag{4}$$

where

$$fom_{[e]} = \kappa_{[e]}/\sqrt{\Gamma_{s[e]}\Gamma_{d[e]}}$$

is the distance-dependent figure-of-merit of the perturbed resonant energy-exchange system. Depending on the targeted application, reasonable choices for the work-drainage rate are: $\Gamma_{work}/\Gamma_{d[e]} = 1$ to minimize the required energy stored in the source.

$$\Gamma_{work}/\Gamma_{d[e]} = \sqrt{1 + fom_{[e]}^2} > 1$$

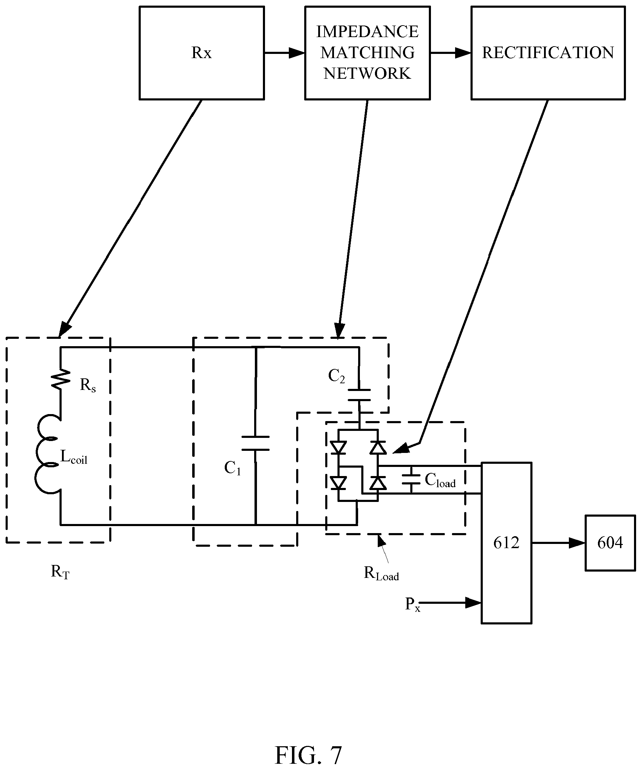

to maximize the efficiency for some particular value of $fom_{[e]}$ or $\Gamma_{work}/\Gamma_{d[e]} \gg 1$ to minimize the required energy stored in the device. For any of these choices, $\eta_{work}$ is a function of the $fom_{[e]}$ parameter only. $\eta_{work}$ is shown for its optimal choice in Fig. 7 with a solid black line, and is $\eta_{work} > 17\%$ for $fom_{[e]} > 1$, namely large enough for practical applications. The loss conversion ratios depend also on the other system parameters, and the most disturbing ones (radiation and absorption in stray objects) are plotted in Fig. 7 for the two example systems of dielectric disks and conducting loops with values for their parameters within the ranges determined earlier.

To get a numerical estimate for a system performance, take, for example, coupling distance $D/r = 5$, a "human" extraneous object at distance $D_h/r = 10$, and that $P_{work} = 10$ W must be delivered to the load. Then, for dielectric disks we have (based on Fig. 5)

$$Q_s^{abs} = Q_d^{abs} \sim 10^4,$$

$$Q_{s[h]}^{rad} = Q_{d[h]}^{rad} \sim 10^3,$$

$$Q_{s\to h}^{abs} = Q_{d\to h}^{abs} \sim 5 \times 10^4$$

and (based on Figs. 2 and 6) $fom_{[h]} \sim 3$, so from Fig. 7 we find efficiency $\eta_{work} = 52\%$ and that $P_{rad} \approx 8.3$ W will be radiated to free space. $P_x \approx 0.5$ W will be dissipated inside the source. $P_d \approx 0.3$ W inside the device, and $P_h \approx 0.2$ W inside the human. On the other hand, for conducting loops we have (based on Figs. 3 and 4)

$$Q_{s[h]}^{rad} = Q_{d[h]}^{rad} \sim 10^4, \; Q_s^{abs} = Q_d^{abs} \sim 10^3, \; Q_{s-h}^{abs} = Q_{d-h}^{abs} \sim \infty$$

and fom$_{[h]} \sim 4$, so we find $\eta_{work} = 61\%$, $P_{rad} \approx 0.6$ W. $P_x \approx 3.6$ W. $P_d \approx 2.2$ W, and most importantly $P_h \rightarrow 0$.

### 5. Conclusion

In conclusion, we present a scheme based on "strongly-coupled" resonances for midrange wireless non-radiative energy transfer. Although our consideration has been for a static geometry (namely $\kappa$ and $\Gamma_e$ were independent of time), all the results can be applied directly for the dynamic geometries of mobile objects, since the energy-transfer time $\kappa^{-1}$ ($\sim$1-100$\mu$s for microwave applications) is much shorter than any timescale associated with motions of macroscopic objects. Analyses of very simple implementation geometries provide encouraging performance characteristics and further improvement is expected with serious design optimization. Thus the proposed mechanism is promising for many modern applications. For example, in the macroscopic world, this scheme could potentially be used to deliver power to robots and/or computers in a factory room, or electric buses on a highway (source-cavity would in this case be a "pipe" running above the highway). In the microscopic world, where much smaller wavelengths would be used and smaller powers are needed, one could use it to implement optical inter-connects for CMOS electronics, or to transfer energy to autonomous nano-objects (e.g. MEMS or nano-robots) without worrying much about the rotative alignment between the sources and the devices.

As a venue of future scientific research, enhanced performance should be pursued for electromagnetic systems either by exploring different materials, such as plasmonic or met-allodielectric structures of large effective refractive index, or by fine-tuning the system design, for example by exploiting the earlier mentioned interference effects between the radiation fields of the coupled objects. Furthermore, the range of applicability could be extended to acoustic systems, where the source and device are connected via a common condensed-matter object.

### SUMMARY

The present invention provides a system and method for utilizing wireless near field magnetic resonance (NFMR) power transmission in a computing environment. While several embodiments and/or examples have been disclosed in this description, the subject matter for which protection is sought is strictly and solely limited to those embodiments and/or examples encompassed by the scope of the appended claims. Embodiments and/or examples mentioned in the description that do not fall under the scope of the claims are useful for understanding the invention.

## BRIEF DESCRIPTION OF THE DRAWINGS

The included drawings are for illustrative purposes and serve only to provide examples of possible structures and arrangements for the disclosed embodiments. These drawings in no way limit any changes in form and detail that may be made to the described embodiments by one skilled in the art without departing from the scope of the embodiments.

FIGS. 1A - 1C illustrate a relationship between magnetic flux and spatial orientation of a closed loop.
FIG. 2 graphically illustrates a relationship between induced voltage, or EMF, and spatial orientation angle $\theta$.
FIGS. 3A - 3B shows power supply unit having an output voltage that is dependent on spatial orientation.
FIGS. 4A-4B and 5A-5F show an orientation independent power supply unit with various arrangements of resonance receivers in accordance with the described embodiments.
FIGS. 6A - 6C show various embodiments of a functional block diagram of a combining circuit suitable for combining power between multiple resonant receivers in accordance with a described embodiment.
FIG. 7 shows a particular implementation of the power sharing circuit shown in FIG. 6A.
FIG. 8 shows multiple frequency resonance power unit having multiple independent resonance receivers in accordance with a described embodiment
FIG. 9 shows a flowchart detailing a method performed by a combiner unit of FIG. 8 in accordance with the described embodiments.
FIGS. 10 and 11 shows representative peripheral devices having small form factor wireless power unit for providing power received from a magnetic field.
FIG. 12 shows a distributed system in accordance with the described embodiments.
FIG. 13 shows a computing system in accordance with the described embodiments.

## DETAILED DESCRIPTION

Various embodiments of a wirelessly powered local computing environment are described. The wireless powered local computing environment includes at least a near field magnetic resonance (NFMR) power supply arranged to wirelessly provide power to any of a number of suitably configured devices. In the described embodiments, the devices arranged to receive power wirelessly from the NFMR power supply can be located in a region known as the near field that extends about a distance D that can be a few times a characteristic size of the NFMR power supply transmission device. Typically, the distance D can be on the order of 1 meter or so.

In the context of this discussion, it is well known that useable power can be wirelessly transmitted by way of a wireless transmitter and receiver transiently coupled by way of a magnetic field. More specifically, a system in accordance with the described embodiments can include a wireless power receiver incorporated within or electrically coupled to a peripheral device that can wirelessly receive useful amounts of power from an external power supply. In the described system, the wireless power receiver can include a first resonator structure having a first resonant frequency $\omega_1$, a first Q factor $Q_1$ (a measure of power transfer efficiency), and a first characteristic size $L_1$. For example, in the context of a computing system where the peripheral device takes the form of a computer mouse or other input device, the characteristic size $L_1$ can be on the order of a few inches or centimeters. The system can also include a power supply coupled to at least a second resonator structure positioned a variable distance d from the first resonator structure having a second resonant frequency $\omega_2$ and a second Q factor $Q_2$ and second characteristic size $L_2$. For example, the second resonator structure can be incorporated within a computer such as a desktop or laptop computer. In this way, a charging region can be formed around the computer in which the peripheral device (or any other appropriately configured device) can wirelessly receive useful amounts of power from the power supply via the second resonator structure.

When first and second resonant frequencies $\omega_1$ and $\omega_2$ $_{are}$ close together, a coupling region between the first and second resonator structures can be formed. Within this coupling region, useful power can be transferred by way of a non-radiative energy transfer mechanism that utilizes resonant-field evanescent tails of the magnetic field provided by the second resonator structure. For example, when the first resonator structure is incorporated into a peripheral device such as a computer mouse, the computer mouse can be at least partially supplied with power from the second resonator structure coupled to the power supply. In this way, the peripheral device can operate in a wireless mode without the need for a separate power supply other than that provided in the computing device. The amount and duration of power that can be delivered to the peripheral device can be strongly dependent on a number of factors. For example, the coupling between the first resonator structure and the second resonator structure can be dependent upon a spatial orientation of the second resonator structure and a magnetic field generated by the first resonant magnetic structure as well as by variable distance *d*.

In order to avoid or at least reduce the spatial orientation dependence, the peripheral device in the described embodiments can include a power receiving unit that incorporates a plurality of individual resonators having different spatial orientations with respect to each other. In this way, power wirelessly received at the power receiving unit can be essentially independent from any movement of the peripheral device with respect to the magnetic field generated by the second resonator structure (hereinafter referred to as the NFMR magnetic field). However, each of the individual resonators can themselves create a magnetic field in response to the NFMR magnetic field that, in turn, can couple with others of the individual resonators. The coupling between the individual resonators in the power receiving unit can be characterized by coupling coefficient κ that can range from zero (0) in those cases where there is little or no magnetic coupling to about one (1) when there is strong magnetic coupling. In those arrangements where the individual resonators are strongly coupled, each resonator can have a substantial effect on other resonators thereby affecting the performance of the power receiving unit as a whole. Therefore it would be advantageous for those power receiving units having more than one individual resonator that coupling coefficient κ between the more than one resonators be as close to zero as practicable. This is particularly true for peripheral devices that can be moved about within the charging region where the relative orientation between the resonator structures and the NFMR magnetic field used to transfer energy from the power supply can vary greatly.

Accordingly, in one embodiment a wirelessly powered local computing environment is described. The wirelessly powered local computing environment can include a NFMR wireless power supply arranged to use a resonance channel to transfer useable energy to resonance circuits within near field distance D. (that defines an outermost wireless range of a magnetic field transmitted by an NFMR power supply transmitter) and a central processing unit that provides processing resources to the NFMR power supply. Also included in the local computing environment is a peripheral device that can freely move about within the local computing environment arranged to wirelessly receive power from the NFMR power transmitter. The peripheral device can include at least a power receiving unit having a least two magnetically de-coupled NFMR power receivers in the form of individual resonators that are electrically coupled to each other to provide output voltage $V_{out}$. Since magnetic coupling coefficient κ between the receiver resonators is about zero, output voltage $V_{out}$ is substantially independent of the spatial orientation of the peripheral device with respect to the NFMR magnetic field. In this way, the peripheral device can wirelessly receive a usable amount of power from the NFMR power supply regardless of its orientation.

These and other embodiments are discussed below with reference to Figs. 1-9. However, those skilled in the art will readily appreciate that the detailed description given herein with respect to these figures is for explanatory purposes only and should not be construed as limiting.

The magnetic coupling between individual resonators in the power receiving unit can be described using Faraday's Law of Induction or more simply Faraday's Law that defines electromotive force (EMF) or voltage as the amount of work done moving unit charge $q$ around the closed curve as shown in FIG. 1A as system 100. According to Faraday's Law, the EMF produced around closed loop path 102 is proportional to time rate of change ($d\Phi/dt$) of magnetic flux $\Phi$ bounded by closed loop path 102 and associated with surface A with normal vector A. In this way, electric current can be induced in any closed circuit when the magnetic flux $\Phi_B$ through surface A changes. The relationship between electromotive force (or voltage) and the change in magnetic flux can satisfy the differential form of Faraday's Law in the form of Eq. (1):

Eq. (1)

where $\varepsilon$ is

$$\varepsilon \text{ is} \quad \mathcal{E} = -N \frac{d\Phi_B}{dt}$$

electromotive force, or voltage, developed by a change in magnetic flux $\Phi_B$ enclosed within area A of a single one of N conductive closed loops each having the same cross sectional area.

Magnetic flux $\Phi_B$ is a scalar that is related to magnetic field vector **B** and normal vector **A** corresponding to surface A defined by closed loop path 102 according to Eq. (2):

$$\text{Eq. (2)} \qquad \Phi_B = \mathbf{B} \cdot \mathbf{A}$$

where:

    **B** is magnetic field vector,
    **A** is normal vector of surface A enclosed by closed loop 102; and
    **B·A** is the dot product vectors **B** and **A**, or in scalar form, ABcos(θ).

Therefore, magnetic flux $\Phi_B$ varies as the cosine of orientation angle $\theta$ where orientation angle $\theta$ represents the spatial orientation of magnetic field vector **B** and normal vector **A** shown in Figs. 1B and 1C. According to Eq. (2) and shown in FIG. 1B, when magnetic field vector **B** and normal vector **A** align with each other (i.e., angle $\theta$ is zero and therefore $\cos(\theta)$ is 1), magnetic flux $\Phi_B$ is a maximum value and therefore any change magnetic flux $\Phi_B$ can result in a maximum EMF ($\varepsilon$) or voltage induced in closed loop 102. It is this induced voltage that can be used to characterize coupling coefficient $\kappa$ between any two individual conductive loops. It should be noted that, as orientation angle $\theta$ varies from 0 and approaches ninety degrees (or $\pi/2$ radians), magnetic flux $\Phi_B$ goes from maximum magnetic flux $\Phi_{Bmax}$ to zero as illustrated in FIG. 1C. Therefore, using Eq. (1) and Eq. (2), as shown in FIG. 2 , the induced voltage, or EMF, is also related to the orientation angle $\theta$ in much the same way as magnetic flux $\Phi_B$. In this way, the magnetic coupling coefficient $\kappa$ between resonators will determine to a substantial degree the overall performance of a wireless power unit with respect to spatial orientation.

FIG. 3A shows wireless power unit 300 having first resonator 302 and second resonator 304 having a magnetic coupling coefficient $\kappa$ with a value of about 1.0 (indicating a strong coupling configuration) and a spatial orientation angle $\theta$ with respect to NFMR magnetic field $B_{NFMR}$. In this configuration, the effect of magnetic coupling between the two resonators is strong enough that a voltage generated at one resonator can effectively cancel out a voltage generated at the other resonator. In this example, and for sake of simplicity, resonators 302 and 304 can each be cylindrical in shape having characteristic length L with N loops of conductive wire 306 that terminates at one end at a common potential (system GND) and another end at terminal nodes 308 and 310 providing voltages V1 and V2, respectively. Wireless power unit 300 can provide output voltage $V_{out}$ as a difference of voltages V1 and V2. In this arrangement, output voltage $V_{out}$ is dependent upon the spatial orientation of wireless power unit 300 with respect to NFMR magnetic field $B_{NFMR}$ as well as the intrinsic coupling between first resonator 302 and second resonator 304 (characterized by magnetic coupling coefficient $\kappa \approx 1.0$). More specifically, any magnetic field generated by first resonator 302 that magnetically couples with second resonator 304 results in a voltage induced in second resonator 304 that is about equal in magnitude and opposite in polarity to that induced in first resonator 302.

More specifically, first resonator 302 can resonate with magnetic field $B_{NFMR}$ to create magnetic field $B_1$. Since magnetic coupling coefficient $\kappa \approx 1.0$ any magnetic field generated by first resonator 302 will magnetically couple with second resonator 304 (and vice versa). For example, as shown in FIG. 3B, magnetic field $B_1$ will interact with second resonator 304 to induce voltage V2 at node 310 that is 180° out of phase with and equal in magnitude with voltage V1 at node 308 (in other words, V1 = -V2) which as shown in FIG. 3B results in a null value for output voltage $V_{out}$ which is clearly unacceptable.

Therefore, by changing the orientation and position of first resonator 302 and second resonator 304 with respect to each other, the magnetic coupling between the resonators can be substantially reduced. In other words, properly orienting and positioning first resonator 302 and second resonator 304 can result in effectively magnetically de-coupling of first resonator 302 and second resonator 304 in which case an effective magnetic coupling coefficient $\kappa_{eff}$ can approach zero. For example, FIG. 4A shows wireless power supply 400 in accordance the described embodiments characterized as having an effective magnetic coupling coefficient $\kappa_{eff} \approx 0$ by which it is meant that the net effect of any magnetic coupling between first resonator 302 and second resonator 304 effectively cancel each other out thereby simulating a situation of no magnetic coupling. More specifically, when first resonator 302 resonates with magnetic field $B_{NFMR}$, induced magnetic field $B_1$ will be generated by first resonator 302. However, unlike the situation where first resonator 302 and second resonator 304 are strongly coupled, magnetic field lines from magnetic field $B_1$ intersect second resonator 304 at about 90°. In this way and in accordance with Eq. (2), the magnetic flux $\Phi$ and therefore any EMF generated in second resonator 304 is about zero.

FIG. 4B shows another situation where second resonator 304 resonates with magnetic field $B_{NFMR}$ creating induced magnetic field $B_2$. In this situation, induced magnetic field $B_2$ interacts with first portion 302-1 of resonator 302 to induce voltage $V_A$. Concurrently, induced magnetic field $B_2$ interacts with second portion 302-2 of resonator 302 to induce voltage $V_B$ that in accordance with Lenz's Law (also known as the right hand rule) is equal in magnitude but opposite in polarity to $V_A$. In this way, any voltages $V_A$ and $V_B$ induced in first resonator 302 effectively cancel each other out resulting in no net induced voltage in first resonator 302 simulating an effective magnetic coupling coefficient $\kappa_{eff}$ of about zero for all orientation angles $\theta$.

FIG. 5A shows another embodiment of orientation independent wireless power supply 400 in the form of wireless power supply 500 in which first resonator 302 and second resonator 304 are placed perpendicular in a cross like arrangement. In this arrangement, the midpoints of both first resonator 302 and second resonator 304 are coincident with each other and displaced in the Z direction distance "r". In this way, magnetic field lines of a magnetic field generated by first resonator 302 intersect second resonator 304 at ninety degrees resulting in magnetic $\Phi_{304}$ for second resonator 304 being about zero. As with the situation described above with respect to FIG. 4A, the net EMF generated is zero resulting in an effective magnetic coupling coefficient $\kappa_{eff} \approx 0$. FIG. 5B shows an equivalent situation for second resonator 304 with respect to first resonator 302. In this way, the symmetric nature of the magnetic field $B_2$ generated by second resonator with respect to first resonator 302 results in an effective coupling coefficient coupling $\kappa_{eff} \approx 0$. FIG. 5C shows additional arrangements of first resonator 302 and second resonator 304 that are divided in substantially equal portions 302a, 302b and 304a, 304b respectively that maintains an effective magnetic coupling coefficient $\kappa_{eff} \approx 0$. FIG. 5D shows additional arrangements of first resonator 302 and second resonator 304 where either one or the other of resonator 302 or 304 are divided in substantially equal portions. For example, as shown second resonator 304 can be divided into substantially equal portions 304a, 304b respectively and arranged in such a way with respect to first resonator 302 that maintains an effective magnetic coupling coefficient $\kappa_{eff} \approx 0$. FIG. 5E and FIG. 5F show representative peripheral devices in the form of computer mouse 500 having various configurations of first resonator 302 and second resonator 304 in accordance with the described embodiments.

However, for magnetic resonance power units having more than one resonant receiver, assuring that the magnetic coupling coefficient $\kappa_{eff} \approx 0$ for the receivers is only the first step to be able to combine their power additively. In particular, the resonating circuit attached to each receiver is required to be isolated from the resonating circuit of another receiver as well as provide load sharing duties for a load device. FIG. 6A is a functional block diagram of a particular embodiment of combining circuit 600 that can be used to transfer power from a plurality of resonant receivers in accordance with the described embodiments. More specifically, each receiver 302 and 304 can be coupled independently to corresponding branches of combining circuit 600. For example, receiver 302 can be coupled to first branch 600-1 that can include at least impedance matching network 602 arranged to match impedances between device 604 and receiver 302. Rectification circuit 606 can be used to convert varying signals (such as AC signal 608) from receiver 302 to DC signal 610 that can then be provided as input to OR circuit 612. Likewise, receiver 304 can be electrically coupled to branch 600-2 that can include impedance matching network 616, rectification circuit 618 that outputs DC signal 620 that can in turn be provided as input to OR circuit 612. In the described embodiment, OR circuit 612 can act as a load balance in order that power P is provided to device 604 in a relatively continuous manner. In other words, if receiver 302 is receiving more power from magnetic field $B_{NFRM}$ than is receiver 304, then OR circuit 612 will allow receiver 302 to provide more power to device 604 than receiver 304, and vice versa.

FIG. 6B shows a specific implementation of OR circuit 612 formed of diodes 622 and 624. FIG. 6C on the other hand shows yet another implementation of OR circuit 612 that includes energy storage elements 626 and 628 arranged to temporarily store energy received from branches 600-1 and 600-2 in the form of rectified DC voltage 608 and 620, respectively. In one embodiment, energy storage elements 626 and 628 can take the form of capacitors 626 and 628. Load balancing switches 630 and 632 can be used to assure proper load balancing between resonators 302 and 304 providing consistent power to device 604.

FIG. 7 shows a model 700 of resonant receivers 302 and 304 power sharing circuit 600. More specifically, each of receivers 302 and 304 can be modeled as inductor L702 and series resister R704. Impedance matching network can be modeled as capacitances C1 and C2 arranged to match receiver load $R_R$ with device load $R_L$. Full bridge rectifier 706 can be used to convert AC signals from transmitters 302 and 304 to DC signals for use by device 606.

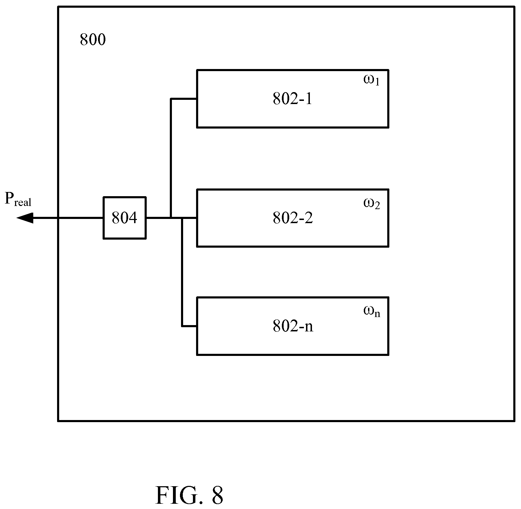

FIG. 8 shows multiple frequency resonance power unit 800 having multiple independent resonance receivers 802-1, 802-2...802-n in accordance with a described embodiment. In the described embodiment, independent resonance receivers 802-1, 802-2... 802-n can each be configured to operate most effectively at different frequency bands. This arrangement can be useful in those situations where, for example, different countries may restrict the use of certain frequency bands due to local regulations leaving a limited number of frequency bands for use to wirelessly provide power. Accordingly, multiple receiver power unit 800 can be configured to include multiple receiving resonators each configured to receive power from a NFMR magnetic field most effectively at a specific frequency band. For example, resonance receiver 802-1 can be configured to receive power most effectively from a NFMR magnetic field in which it is immersed at frequency $\omega_1$. On the other hand, resonance receiver 802-2 can be configured to receive power most effectively from the NFMR magnetic field in which it is immersed at frequency $\omega_2$. In any case, power combiner unit 804 can be used to combine power of the receivers in those situations where useable power is being received at frequency $\omega_1$ and frequency $\omega_2$.

However, in situations where power is received from the NFMR magnetic field at either frequency $\omega_1$ or frequency $\omega_2$, combiner unit 804 can be used to select whichever resonance receiver (either resonance receiver 802-1 or resonance receiver 802-2) is operating or at least receiving an amount of power greater than a threshold value. In this situation, combiner unit 804 can sense an amount of power being received at resonance receivers 802-1 and 802-2 and based upon the comparison, combiner unit 804 can select the appropriate resonance power receiver to provide power to a circuit. In one embodiment, the resonance receiver deemed to be most effective in its interaction with the NFMR magnetic field (based upon an amount of real power received, for example) can be selected. The effectiveness of the interaction with the NFMR magnetic field can be based upon an amount of induced magnetic flux in one or the other resonance receivers. It should be noted that the sensing and selecting can be ongoing and performed in real time. In this way, the multiple resonance receivers can be placed in close physical proximity to each other resulting in an effective magnetic coupling coefficient $\kappa_{eff} > 0$.

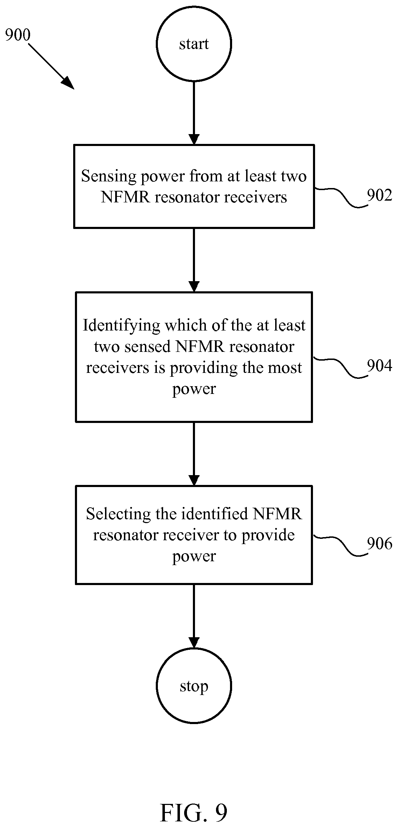

FIG. 9 shows a flow chart detailing process 900 carried out by combiner unit 804 in accordance with an embodiment of the invention. Process 900 can begin at 902 by the combiner unit sensing power received from at least two resonant power receivers each of which is arranged to receive power from an NFMR magnetic field at specified resonant frequencies that are different from each other. At 904, the combiner unit identifies which of the sensed resonant power receivers is providing the most power. At 906, the combiner unit provides power from the identified resonant power receivers.

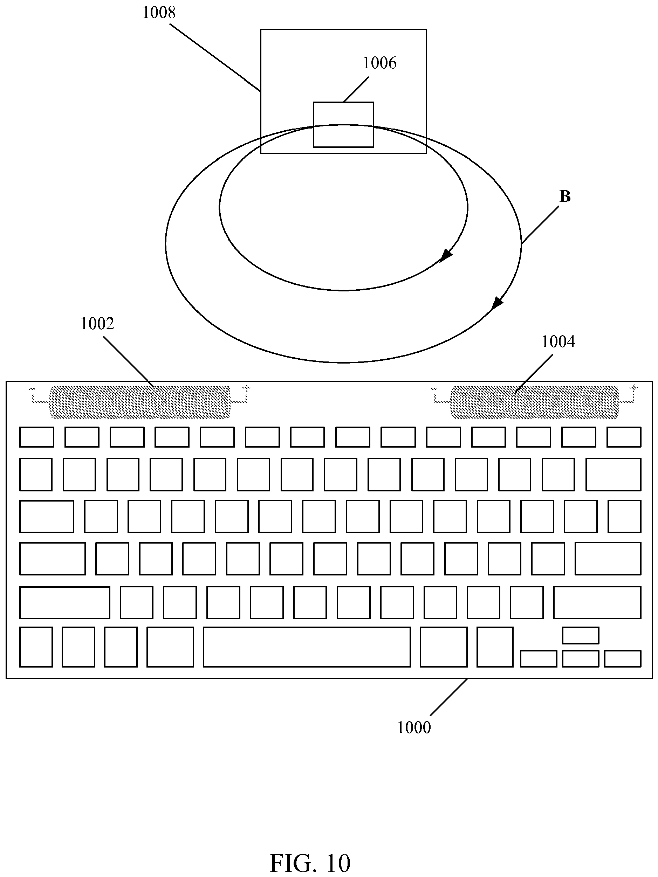

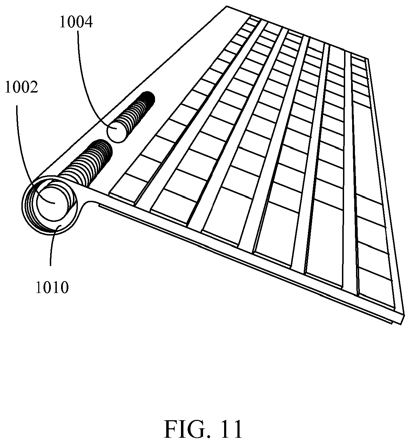

FIG. 10 shows a representative peripheral device in the form of computer keyboard 1000 in accordance with the described embodiments. Computer mouse 1000 can include at least first small form factor wireless power unit 1002 and second small form wireless power unit 1004 each of which can wirelessly receive power from magnetic field **B**. In the described embodiment, magnetic field **B** can be provided by magnetic transmitter unit 1006 incorporated into, for example, computing device 1008, such as a desktop computer. During most foreseeable operational scenarios, keyboard 1000 will be positioned with respect to desktop computer 1008 in front facing arrangement. In this way, there is no need to magnetically de-couple small form factor wireless power unit 1002 and 1004 and as such both can provide power at the same time that can be used to operate keyboard 1000. Since small form factor wireless power units 1002 and 1004 can be sized along the lines of a standard AAA battery, small form factor wireless power units 1002 and 1004 (or just one if need be) can be accommodated into battery compartment 1010 of keyboard 1000 as shown in FIG. 11. In this way, small form factor wireless power supply 1002 and 1004 can be used to systematically replace conventional batteries along the lines of standard AAA batteries. It should be noted however, that since small form factor wireless power units 1002 and 1004 can be of any size and shape, it is contemplated that any battery of any size or configuration can be replaced by small form factor power units 1002 and 1004.

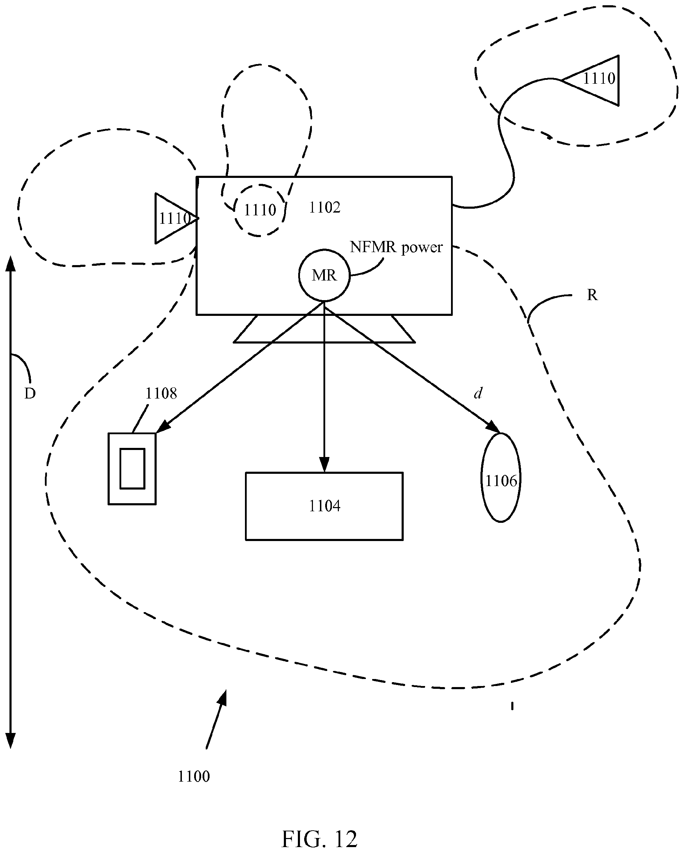

Fig. 12 shows representative virtual charging area 1100 in accordance with the described embodiments. Virtual charging area 1100 provides region R of charging for suitably configured devices placed within the region R. NFMR power supply can be placed in central unit such as desktop computer. In this way, the desktop computer can provide the NFMR power supply with computing resources. It should be noted that the near field magnetic resonance (NFMR) power supply can include high Q circuit that relies upon near field magnetic coupling by way of a resonance channel formed between resonances of the power source and sink to transfer power. The NFMR power supply can be a standalone unit such as, for example, included in a desk top computer, laptop computer, tablet computer, and so on. In other embodiments, the NFMR power supply can take the form of a portable type unit such as a dongle that can be connected to a legacy device such as a desktop computer thereby providing the ability to retrofit devices. In still other embodiments, housing or a portion of a housing used to enclose the NFMR power source can act to extend a useful range of the NFMR power supply.

As shown in Fig. 12 virtual charging area 1100 includes central unit 1102 (desktop computer) that can include the NFMR power supply, keyboard 1104, mouse 1106, and portable media player 1108. In one embodiment, keyboard 1104 can be configured to receive power directly from the NFMR power supply included in desktop computer 1102 as can mouse 1106 and portable media player 1108 (when located within range R).

In some cases, the ability of desktop computer 1102 to provide power directly to mouse 1108, for example, can be reduced due to any number of factors. Such factors can include, for example, the addition of other devices into region R that require power from the NFMR power supply, obstacles interfering with the direct power channel formed between the NFMR and mouse 1106, and so on. In this case, keyboard 1104 can act as a re-resonator such that a portion of the power delivered to keyboard 1104 from the NFMR power supply can be passed on by way of a re-resonator transmission unit (not shown) in keyboard 1104. In this way, any power loss experienced by mouse 1106 can be ameliorated by the power received from keyboard 1104. This arrangement can be transitory or can last for as long as mouse 1106 is not able to receive adequate power directly from the NFMR power supply. In other cases, the locating of portable media player 1108 within region R can reduce the amount of power available to keyboard 1104 and mouse 1106. In this case, if a battery in keyboard 1106 is fully charged (or additional charge is not necessary) then keyboard 1106 can decouple a charging circuit while still maintaining a re-resonator circuit providing power to mouse 1106.

In some embodiments, dongle 1110 can be connected to desktop computer 1102 (by way of a USB port or cable, for example). So connected, dongle 1110 can, in turn, act as a range extender for the NFMR power supply. In this way, dongle 1110 can extend a range that power can be provided by the NFMR power supply included in desktop computer 1102. In some cases, dongle 1110 can re-resonate power already received from the NFMR power supply while in other cases, dongle 1110 can include its own NFMR power supply. By having its own NFMR power supply, dongle 1110 can provide additional power wirelessly to those devices within virtual charging region 1100 separate from the power provided by the NFMR power supply included in desktop 1102. It should be noted that in some embodiments, the housing of desktop computer 1102 (or a portion thereof) can be used as a resonator as part of the NFMR power supply.

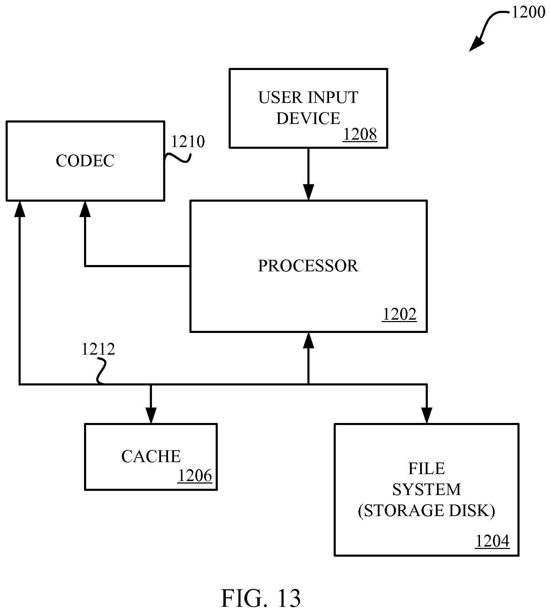

FIG. 13 is a block diagram of computing system 1200 in accordance with the described embodiments. Computing system 1200 includes processor 1202 that pertains to a microprocessor or controller for controlling the overall operation of computing system 1200. Computing system 1200 stores data pertaining to media items, for example, in a file system 1204 and a cache 1206. The file system 1204 is, typically, a storage disk or a plurality of disks. The file system typically provides high capacity storage capability for computing system 1200. However, since the access time to the file system 1204 is relatively slow, computing system 1200 also includes a cache 1206. The cache 1206 is, for example, Random-Access Memory (RAM) provided by semiconductor memory. The relative access time to the cache 1206 is substantially shorter than for the file system 1204. However, the cache 1206 does not have the large storage capacity of the file system 1204. Further, the file system 1204, when active, consumes more power than does the cache 1206. The power consumption is particularly important when the computing system 1200 is a portable media player that is powered by a battery (not shown).

Computing system 1200 also includes a user input device 1208 that allows a user of computing system 1200 to interact with computing system 1200. For example, the user input device 1208 can take a variety of forms, such as a button, keypad, dial, etc. Still further, the computing system 1200 includes data bus 1210 can facilitate data transfer between at least the file system 1204, the cache 1206, the processor 1202, and the CODEC 1212.

In one embodiment, computing system 1200 serves to store a plurality of media items (e.g., songs) in the file system 1204. When a user desires to have the media player play a particular media item, a list of available media items is displayed on the display 1210. Then, using the user input device 1208, a user can select one of the available media items. The processor 1202, upon receiving a selection of a particular media item, supplies the media data (e.g., audio file) for the particular media item to a coder/decoder (CODEC) 1212. The CODEC 1212 then produces audio output signals for audio jack 1214 to output to an external circuit. For example, headphones or earphones that connect to computing system 1200 would be considered an example of the external circuit. In another embodiment, a computer-readable medium is provided that includes computer program instructions.

The various aspects, embodiments, implementations or features of the described embodiments can be used separately or in any combination. Various aspects of the described embodiments can be implemented by software, hardware or a combination of hardware and software. The described embodiments can also be embodied as computer readable code on a computer readable medium for controlling manufacturing operations or as computer readable code on a computer readable medium for controlling a manufacturing line. The computer readable medium is any data storage device that can store data which can thereafter be read by a computer system. Examples of the computer readable medium include read-only memory, random-access memory, CD-ROMs, DVDs, magnetic tape, and optical data storage devices. The computer readable medium can also be distributed over network-coupled computer systems so that the computer readable code is stored and executed in a distributed fashion.

The foregoing description, for purposes of explanation, used specific nomenclature to provide a thorough understanding of the described embodiments. However, it will be apparent to one skilled in the art that the specific details are not required in order to practice the invention, which is defined by the appended claims. Thus, the foregoing descriptions of specific embodiments are presented for purposes of illustration and description. They are not intended to be exhaustive or to limit the invention to the precise forms disclosed. It will be apparent to one of ordinary skill in the art that many modifications and variations are possible in view of the above teachings.

## Claims

1. A wireless power unit (800) arranged to wirelessly receive power using a near field magnetic resonance (NFMR) magnetic field provided by an NFMR transmitter unit having a resonance frequency $\omega_T$, the wireless power unit (800) comprising:

   a first resonator structure (802-1), the first resonator structure having a first resonant frequency $\omega_1$;
   a second resonator structure (802-2), the second resonator structure having a second resonant frequency $\omega_2$, that is different than the first resonant frequency $\omega_1$; and
   a power combining circuit (804) coupled to the first and second resonator structures (802-1, 802-2), wherein the power combining circuit (804) is configured to
   select one of the first and second resonator structures (802-1, 802-2) to provide power to a load coupled to the wireless power unit (800) based on an amount of power provided by the first and second resonator structures (802-1, 802-2).

2. The wireless power unit (800) as recited in claim 1, wherein the first resonator structure (802-1) is in a tuned state when the first resonant frequency $\omega_1$ and the resonance frequency $\omega_T$ are separated by a bandwidth of no more than 3db.

3. The wireless power unit (800) as recited in claim 1, wherein the second resonator structure (802-2) is in a tuned state when the second resonant frequency $\omega_2$ and the resonance frequency $\omega_T$ are separated by a bandwidth of no more than 3db.

4. The wireless power unit (800) as recited in claim 1, wherein the first resonator structure (802-1) comprises:

a first resonating coil, the first resonating coil comprising:

> a first cylindrical central core region, and
> a first plurality of loops of continuous conductive material circumferentially wrapped around the first cylindrical central core region.

5. The wireless power unit (800) as recited in claim 4, wherein the second resonator structure (802-2) comprises:
a second resonating coil, the second resonating coil comprising:

> a second cylindrical central core region; and
> a second plurality of loops of continuous conductive material circumferentially wrapped around the second cylindrical central core region.

6. The wireless power unit (800) as recited in claim 5, wherein a length of the first resonating coil is in accordance with a characteristic size $L_1$ of the first resonator structure (802-1) and a length of the second resonating coil is in accordance with a characteristic size $L_2$ of the second resonator structure (802-2).

**Patentansprüche**

1. Drahtlose Leistungseinheit (800), die angeordnet ist zum drahtlosen Empfangen von Leistung unter Verwenden von Nahfeld-Magnetresonanz (NFMR) Magnetfelder, die durch eine NFMR Transmittereinheit übertragen werden, die eine Resonanzfrequenz $\omega_t$ aufweist, die drahtlose Leistungseinheit (800) umfassend:

> eine erste Resonatorstruktur (802-1), wobei die erste Resonatorstruktur eine erste Resonanzfrequenz $\omega_1$ aufweist;
> eine zweite Resonatorstruktur (802-2), wobei die zweite Resonatorstruktur eine zweite Resonanzfrequenz $\omega_2$ aufweist, die von der ersten Resonanzfrequenz $\omega_1$ verschieden ist; und
> eine Leistungs-Kombinationseinheit (804), die mit der ersten und zweiten Resonatorstruktur (802-1, 802-2) gekoppelt ist, wobei die Leistungs-Kombinationseinheit (804) konfiguriert ist zum
> Auswählen einer der ersten und zweiten Resonatorstruktur (802-1, 802-2) zum Bereitstellen von Leistung für eine Last, die mit der drahtlosen Leistungseinheit (800) gekoppelt ist, basierend auf einer Anzahl von Leistung, die durch die erste und zweite Resonatorstruktur (802-1, 802-2) bereitgestellt wird.

2. Drahtlose Leistungseinheit (800) nach Anspruch 1, wobei die erste Resonatorstruktur (802-1) sich in einem gestimmten Zustand befindet, wenn die erste Resonanzfrequenz $\omega_1$ und die Resonanzfrequenz $\omega_t$ durch eine Bandbreite von nicht mehr als 3 dB getrennt sind.

3. Drahtlose Leistungseinheit (800) nach Anspruch 1, wobei die zweite Resonatorstruktur (802-2) sich in einem gestimmten Zustand befindet, wenn die zweite Resonanzfrequenz $\omega_2$ und die Resonanzfrequenz $\omega_t$ durch eine Bandbreite von nicht mehr als 3dB getrennt sind.

4. Drahtlose Leistungseinheit (800) nach Anspruch 1, wobei die erste Resonatorstruktur (802-1) umfasst:
eine erste Resonatorspule, die erste Resonatorspule umfassend:

> einen ersten zylindrischen zentralen Kernbereich, und
> eine erste Vielzahl von Schleifen von durchgehendem, leitendem Material, das umlaufend um den ersten zylindrischen zentralen Kernbereich gewickelt ist.

5. Drahtlose Leistungseinheit (800) nach Anspruch 4, wobei die zweite Resonatorstruktur (802-2) umfasst:
eine zweite Resonatorspule, die zweite Resonatorspule umfassend:

> einen zweiten zylindrischen zentralen Kernbereich, und
> eine zweite Vielzahl von Schleifen von durchgehendem leitendem Material, das umlaufend um den zweiten zylindrischen zentralen Kernbereich gewickelt ist.

6. Drahtlose Leistungseinheit (800) nach Anspruch 5, wobei eine Länge der ersten Resonanzspule in Übereinstimmung mit einer charakteristischen Größe L1 der ersten Resonatorstruktur (802-1) ist und eine Länge der zweiten Resonanzspule in Übereinstimmung mit einer charakteristischen Größe L2 der zweiten Resonatorstruktur (802-2) ist.

**Revendications**

1. Une unité d'alimentation sans fil (800) agencée pour recevoir sans fil de de la puissance en utilisant un champ magnétique à résonance magnétique en champ proche (NFMR) produit par un émetteur NFMR ayant une fréquence de résonance $\omega_T$, l'unité d'alimentation sans fil (800) comprenant :

   une première structure de résonateur (802-1), la première structure de résonateur ayant une première fréquence de résonance $\omega_1$ ;
   une seconde structure de résonateur (802-2), la seconde structure de résonateur ayant une seconde fréquence de résonance $\omega_2$ qui est différente de la première fréquence de résonance $\omega_1$ ; et
   un circuit combineur d'alimentation (804) couplé à la première et à la seconde structure de résonateur (802-1, 802-2), le circuit combineur d'alimentation (804) étant configuré pour
   sélectionner l'une de la première et de la seconde structure de résonateur (802-1, 802-2) pour délivrer de la puissance à une charge couplée à l'unité d'alimentation sans fil (800) sur la base d'un niveau de puissance délivré par la première et la seconde structure de résonateur (802-1, 802-2).

2. L'unité d'alimentation sans fil (800) telle qu'énoncée dans la revendication 1, dans laquelle la première structure de résonateur (802-1) est dans un état accordé lorsque la première fréquence de résonance $\omega_1$ et la fréquence de résonance $\omega_T$ sont séparées par une largeur de bande non supérieure à 3 dB.

3. L'unité d'alimentation sans fil (800) telle qu'énoncée dans la revendication 1, dans laquelle la seconde structure de résonateur (802-2) est dans un état accordé lorsque la seconde fréquence de résonance $\omega_2$ et la fréquence de résonance $\omega_T$ sont séparées par une largeur de bande non supérieure à 3 dB.

4. L'unité d'alimentation sans fil (800) telle qu'énoncée dans la revendication 1, dans laquelle la première structure de résonateur (802-1) comprend :
   une première bobine résonante, la première bobine résonante comprenant :

   une première région centrale cylindrique de noyau, et
   une première pluralité d'enroulements d'un matériau continument conducteur enroulées circonférentiellement autour de la première région centrale cylindrique de noyau.

5. L'unité d'alimentation sans fil (800) telle qu'énoncée dans la revendication 4, dans laquelle la seconde structure de résonateur (802-2) comprend :
   un second bobinage résonant, le second bobinage résonant comprenant :

   une seconde région centrale cylindrique de noyau ; et
   une seconde pluralité d'enroulements d'un matériau continument conducteur enroulées circonférentiellement autour de la seconde région centrale cylindrique de noyau.

6. L'unité d'alimentation sans fil (800) telle qu'énoncé dans la revendication 5, dans laquelle une longueur de la première bobine résonante correspond à une dimension caractéristique $L_1$ de la première structure de résonateur (802-1), et une longueur de la seconde bobine résonante correspond à une dimension caractéristique $L_2$ de la seconde structure de résonateur (802-2).

100

$\tilde{\mathbf{B}}$          $\tilde{\mathbf{B}}$

A     $\tilde{\mathbf{A}}$                    $\Phi =$
                                  $B \cdot A$

FIG. 1A                           $\Phi = B \times A \times \cos\theta$

102

100

$\tilde{\mathbf{B}}$   $\tilde{\mathbf{A}}$

                A

FIG. 1B                $\Phi_1 = B \times A \times \cos\theta = BA$

$\theta = 0$

102

100

$\tilde{\mathbf{B}}$

A

FIG. 1C   $\tilde{\mathbf{A}}$   $\theta = \pi/2$

                      $\Phi_2 = B \times A \times \cos\theta = 0$

102

FIG. 2

EP 2 715 915 B1

306
302
q
$\tilde{B}_1$

306
304
q
x
$\tilde{B}_1$

FIG. 3A

L
$\tilde{B}_1$
$\tilde{B}_{NFMR}$
308
V1
304
302
θ
306
312
$\tilde{B}_1$
$\kappa \approx 1.0$
310
V2
306
300

FIG. 3B

$V_{out}$
$V_1$
$\pi/2$
$\pi$
$V_{out} = 0$
θ
$V_2$

302

$\theta$

$\tilde{\mathbf{B}}_1$

FIG. 4A

304

$\kappa_{eff} \approx 0.0$

$(d\Phi/dt)_{304} \approx 0.0$

400

$(d\Phi/dt)_{302A} \approx - (d\Phi/dt)_{302B}$

$V_A = -V_B$

$\theta$

302A

302B

304

FIG. 4B

$\tilde{\mathbf{B}}_2$

$\kappa_{eff} \approx 0.0$

400

FIG. 5A

$(d\Phi/dt)_{304} \approx 0.0$

$\kappa_{eff} \approx 0.0$

FIG. 5B

$(d\Phi/dt)_{302} \approx 0.0$

$\kappa_{eff} \approx 0.0$

FIG. 5C

304a

302a          302b

$(d\Phi/dt)_{304} \approx 0.0$

$\kappa_{eff} \approx 0.0$

$\tilde{\mathbf{B}}_1$

304b                    500

FIG. 5D

304a          $\tilde{\mathbf{B}}_2$

$(d\Phi/dt)_{302} \approx 0.0$

302

304b

$\kappa_{eff} \approx 0.0$

500

FIG. 5E

FIG. 5F

FIG. 6A

FIG. 6B

FIG. 6C

Rx

IMPEDANCE
MATCHING
NETWORK

RECTIFICATION

$R_s$

$L_{coil}$

$C_1$

$C_2$

$C_{load}$

$R_T$

$R_{Load}$

612

604

$P_x$

FIG. 7

FIG. 8

900

start

Sensing power from at least two
NFMR resonator receivers          902

Identifying which of the at least
two sensed NFMR resonator
receivers is providing the most
power                             904

Selecting the identified NFMR
resonator receiver to provide
power                             906

stop

FIG. 9

FIG. 10

FIG. 11

FIG. 12

FIG. 13

**EP 2 715 915 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20080298100 A

**Non-patent literature cited in the description**

- **ARISTEIDIS KARALIS et al.** Efficient Wireless non-radiative mid-range energy transfer. *Annals of Physics,* 27 April 2007, vol. 323, 34-48